(19) Europäisches Patentamt
European Patent Office
Office européen des brevets

(11) EP 2 944 979 B1

(12) **EUROPEAN PATENT SPECIFICATION**

(45) Date of publication and mention
of the grant of the patent:
**10.04.2019 Bulletin 2019/15**

(51) Int Cl.:
***G01V 1/00*** *(2006.01)*        ***G01V 1/18*** *(2006.01)*

(21) Application number: **13871034.8**

(86) International application number:
**PCT/JP2013/080298**

(22) Date of filing: **08.11.2013**

(87) International publication number:
**WO 2014/109121 (17.07.2014 Gazette 2014/29)**

(54) **VIBRATION INTENSITY MEASURING DEVICE AND CONTROL METHOD FOR SAME**

SCHWINGUNGSINTENSITÄTSMESSVORRICHTUNG UND VERFAHREN ZUR STEUERUNG DAVON

DISPOSITIF DE MESURE D'INTENSITÉ DE VIBRATION ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.01.2013 JP 2013003618**

(43) Date of publication of application:
**18.11.2015 Bulletin 2015/47**

(73) Proprietor: **Omron Corporation
Kyoto-shi, Kyoto 600-8530 (JP)**

(72) Inventors:
• **MINO, Hiroyuki
Kyoto-shi
Kyoto 600-8530 (JP)**
• **UEDA, Naotsugu
Kyoto-shi
Kyoto 600-8530 (JP)**

(74) Representative: **Kilian Kilian & Partner
Aidenbachstraße 54
81379 München (DE)**

(56) References cited:
**JP-A- H09 318 763        JP-A- 2003 255 052
JP-A- 2006 105 759        JP-A- 2009 156 743
JP-A- 2010 164 325        JP-A- 2011 047 657
US-A- 4 663 628           US-A1- 2005 226 098
US-A1- 2008 231 343**

**Description**

TECHNICAL FIELD

The present invention relates to a vibration intensity measuring device that measures the intensity of vibration and a method for controlling the vibration intensity measuring device.

RELATED ART

Conventionally, control seismographs are used as devices for controlling various systems in accordance with the intensity of earthquakes to prevent damage from spreading and secondary disasters from occurring. As examples of such control seismographs, seismographs that measure the intensity of vibration using the spectrum intensity (hereinafter referred to as "SI value"), which is a measure of the intensity of ground motion and is highly correlated with damage (loss) to structures, and output a control signal such as a discrimination signal based on the measured intensity have been proposed (JP 2001-42049A etc.).

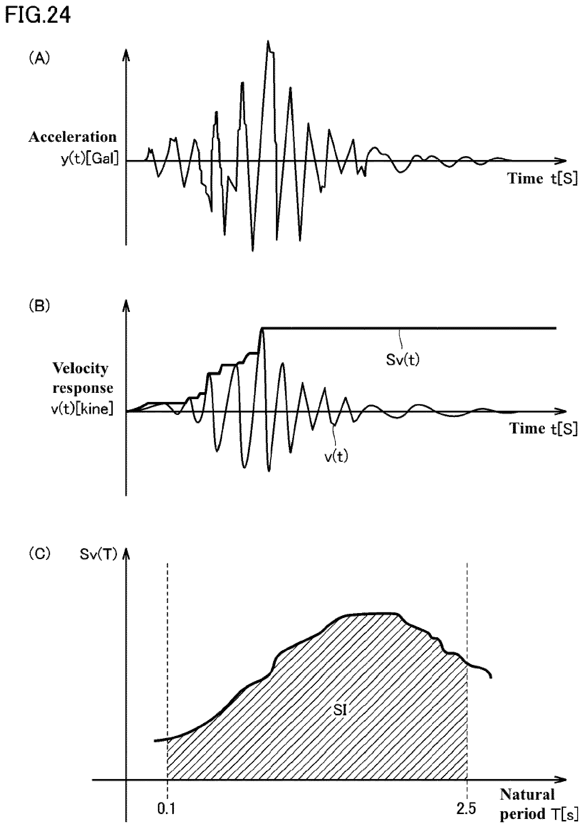

When ground motion occurs, changes in its acceleration y(t) over time are observed as shown in Fig. 24(A), for example. At this time, changes in velocity value v(t) and maximum velocity value Sv(t) over time of a structure are as shown in Fig. 24(B). Note that the maximum velocity value Sv(t) refers to the greatest value of the velocity values v(t) that are generated until a specific time. Moreover, at a specific time during such a vibration, the spectral distribution of the maximum velocity value Sv(t) with respect to a natural period (eigenperiod) T is as shown in Fig. 24(C), and an SI value at that time can be obtained by averaging this distribution (i.e., dividing the area of the shaded portion in this diagram by an integration interval). Note that the natural period T depends on the size and the like of a structure, and it is found that major structures have a natural period T within the range of the aforementioned integration interval (0.1 to 2.5).

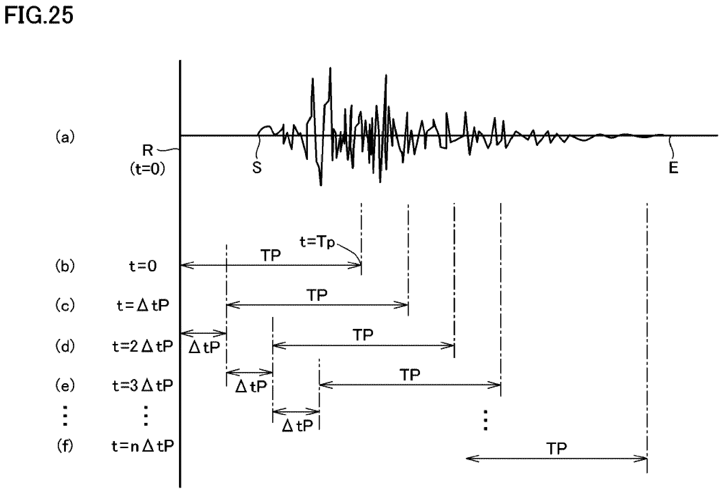

The waveform shown in Fig. 25 is obtained by plotting time-series data on the acceleration y(t) of vibration detected by an acceleration detection unit. In this diagram, RR indicates the measurement start time, SS indicates the time at which an earthquake occurs, and EE indicates the time at which the earthquake ends. This time-series data is sampled with an extremely short period (e.g., 10 milliseconds) and stored in a memory (RAM). In order to obtain SI values from this time-series data in near real-time, at a point in time when a predetermined period of time Tp has elapsed from the time RR, the time-series data on the acceleration y(t) that has been obtained up to that point in time is read from the memory, and temporarily converted to velocity values v(t) (Equation 1 below) for each natural period T. Subsequently, a maximum velocity value Sv(t) (Equation 2 below) is obtained for each natural period T, and an SI value (Equation 3 below) is calculated from the obtained maximum velocity values Sv(t). At a point in time when a predetermined period of time Δtp has elapsed thereafter, the time-series data from the time (R+Δtp) to the time (R+Tp+Δtp) is read from the memory, and the same computation is performed. After that, each time the period of time Δtp has elapsed, an SI value is calculated.

Note that in these equations, "t" [s] represents the current time, $\tau$ represents the integration interval (period of time), T represents the natural period of a structure, "h" represents the damping constant of the structure, $\omega$ represents the natural angular frequency ($\omega = 2\pi/T$ [rad/s]), and $\omega d$ represents the damped natural angular frequency ($\omega d = \omega \times (1-h^2)^{1/2}$ [rad/s]).

Equation 1

$$v(t) = -\int_0^t y(t) \cdot e^{-h\omega(t-\tau)} \times \left[ \cos \omega d(t-\tau) - \frac{h}{\sqrt{1-h^2}} \sin \omega d(t-\tau) \right] d\tau$$

Equation 2

$$Sv(t) = |v(t)|_{max}$$

Equation 3

$$SI = \frac{1}{2.4} \int_{0.1}^{2.5} Sv(t) dT$$

A system and a method for dynamically adjusting parameters of a data acquisition of an acoustic receiver are known from US 2005/226098 A1. Further prior art is disclosed in the documents US 4,663,628 A, JP-2011-047657 A and US 2008/231343 A.

SUMMARY OF THE PRESENT INVENTION

PROBLEM TO BE SOLVED BY THE PRESENT INVENTION

The conventional method for measuring vibration intensity attempts to obtain accurate computation results all the time during a period from the onset to the end of an earthquake, and thus continuously places a calculation load (processing load). Therefore, the power consumption that depends on the computation load also increases.

On the other hand, with respect to information that is desired to be acquired as information on the vibration characteristics of earthquakes and the like, detection of the occurrence of an earthquake, detection of whether or not the size of the earthquake exceeds a critical level, calculation of the maximum SI value of the earthquake, and the like are required. However, it is conceivable that, for example, in such a situation in which the earthquake is in the process of ending, computation processing that is as accurate as the computation processing that is performed immediately after the onset of the earthquake is no longer necessary.

The present invention was made to address problems such as those described above, and it is an object thereof to provide a vibration intensity measuring device that can execute accurate computation processing and also reduce the power consumption by executing more efficient computation processing, and a method for controlling the vibration intensity measuring device.

MEANS FOR SOLVING THE PROBLEMS

These objects are achieved by the features of the independent claims.

Further preferred embodiments of the invention are defined by the dependent claims. Aspects of the present invention are set out below.

A method for controlling a vibration intensity measuring device according to an aspect of the present invention includes acquiring acceleration data generated by an acceleration detection unit and measuring vibration intensity based on the acquired acceleration data. At least one of the acquiring step and the measuring step includes judging whether or not a vibration characteristic during a period of time from the onset to the end of vibration satisfies a predetermined condition and adjusting at least one of acquisition processing of the acquiring step and calculation processing of the measuring step, if it is judged that the predetermined condition is satisfied.

Preferably, the acceleration detection unit generates the acceleration data in accordance with a variable sampling interval, and in the adjusting step, if it is judged that the predetermined condition is satisfied, the sampling interval is set to a long time.

Preferably, the acceleration detection unit sequentially stores the acceleration data in a memory, in the acquiring step, the acceleration data stored in the memory is collectively acquired in accordance with a variable communication interval, and in the adjusting step, if it is judged that the predetermined condition is satisfied, the communication interval is set to a long time.

Preferably, the vibration intensity measuring step includes calculating velocity values in each natural period based on the acquired acceleration data and calculating a maximum velocity value based on the calculated velocity values in each natural period, and in the adjusting step, if it is judged that the predetermined condition is satisfied, the number of velocity values in each natural period that are used in calculation of the maximum velocity value is decreased.

Preferably, the vibration intensity measuring step includes calculating velocity values based on the acquired acceleration data, calculating maximum velocity values based on the calculated velocity values, and calculating an index indicating the vibration intensity based on the maximum velocity values, and in the adjusting step, if it is judged that the predetermined condition is satisfied, a computation interval with respect to at least one of the velocity values and the index indicating the vibration intensity is set to a long time.

Preferably, the vibration intensity measuring step includes calculating velocity values based on the acquired acceleration data, calculating maximum velocity values based on the calculated velocity values, and calculating an index indicating the vibration intensity based on the maximum velocity values, and in the adjusting step, if it is judged that the predetermined condition is satisfied, a maximum velocity measurement interval that is a timing at which the maximum velocity value is reset is changed.

Preferably, the acceleration detection unit generates acceleration data with respect to each of a plurality of axes, the vibration intensity measuring step includes calculating velocity values based on the acquired acceleration data, calculating maximum velocity values based on the calculated velocity values, and calculating an index indicating the vibration intensity based on the maximum velocity values, and in the adjusting step, if it is judged that the predetermined condition is satisfied, with regard to the acquired acceleration data, the acceleration data with respect to the plurality of axes is synthesized.

Preferably, the acceleration detection unit generates acceleration data with respect to each of a plurality of axes, the vibration intensity measuring step includes calculating velocity values based on the acquired acceleration data, calculating maximum velocity values based on the calculated velocity values, and calculating an index indicating the vibration intensity based on the maximum velocity values, and in the adjusting step, if it is judged that the predetermined condition is satisfied, velocity values that are based on the acceleration data with respect to each of the plurality of axes are synthesized in the velocity value calculating step.

A method for controlling a vibration intensity measuring device including an acceleration detection unit detecting acceleration with respect to a plurality of axes according to another aspect of the present invention includes acquiring acceleration data with respect to each of the axes, the acceleration data being generated by the acceleration detection unit, and measuring vibration intensity based on the acquired acceleration data with respect to each of the axes, the vibration intensity measuring step including synthesizing the acquired acceleration data with respect to each of the axes, calculating velocity values based on the synthesized acceleration data, calculating maximum velocity values based on the calculated velocity values, and calculating an index indicating the vibration intensity based on the maximum velocity values.

A method for controlling a vibration intensity measuring device including an acceleration detection unit detecting acceleration with respect to a plurality of axes according to still another aspect of the present invention includes acquiring acceleration data with respect to each of the axes, the acceleration data being generated by the acceleration detection unit, and measuring vibration intensity based on the acquired acceleration data with respect to each of the axes, the vibration intensity measuring step including calculating velocity values with respect to each of the axes based on the acquired acceleration data with respect to each of the axes, synthesizing the calculated velocity values with respect to each of the axes, calculating maximum velocity values based on the synthesized velocity values, and calculating an index indicating the vibration intensity based on the maximum velocity values.

A vibration intensity measuring device according to an aspect of the present invention is a vibration intensity measuring device having an acceleration detection unit, the vibration intensity measuring device including a controller connected to the acceleration detection unit, the controller acquiring acceleration data generated by the acceleration detection unit, measuring vibration intensity based on the acquired acceleration data, judging, in at least one of acquisition processing for acquiring the acceleration data and calculation processing for measuring the vibration intensity, whether or not a vibration characteristic during a period of time from the onset to the end of vibration satisfies a predetermined condition, and adjusting at least one of the acquisition processing of the acceleration data and the calculation processing for measuring the vibration intensity, if it is judged that the predetermined condition is satisfied.

EFFECTS OF THE PRESENT INVENTION

It is possible to execute accurate computation processing and also reduce the power consumption by executing more efficient computation processing.

BRIEF DESCRIPTION OF THE DRAWINGS

Fig. 1   is a schematic configuration diagram of a vibration intensity measuring device 1 according to an embodiment of the present invention.

Fig. 2   is a flow diagram for explaining an example of the outline of the flow of processing of the vibration intensity measuring device 1 according to the embodiment.

Fig. 3   is a diagram for explaining the flow of acquisition processing of a computation processing unit 30 according to the embodiment.

Fig. 4   is a diagram for explaining the flow of computation processing of the computation processing unit 30 according to the embodiment.

Fig. 5   is a diagram for explaining a general flow of judgement processing according to the embodiment.

Fig. 6   shows diagrams for explaining predetermined conditions for use in the judgement processing of the embodiment.

Fig. 7   shows diagrams for explaining the flow of judgement processing of the computation processing unit 30 according to the embodiment.

Fig. 8   is a diagram for explaining adjustment of parameters in an operating mode of a sensor unit 10 according to the embodiment.

Fig. 9   is a diagram for explaining adjustment of parameters of communication processing between the sensor unit 10 and the computation processing unit 30 according to the embodiment.

Fig. 10    shows diagrams for explaining adjustment of the number of natural period velocities in the computation processing of the computation processing unit 30 according to the embodiment.

Fig. 11    is a diagram for explaining a method for saving a maximum velocity value according to the embodiment.

Fig. 12    is a diagram for explaining adjustment of an interval at which the maximum velocity value is measured in the computation processing of the computation processing unit 30 according to the embodiment.

Fig. 13    is a diagram for explaining adjustment of a computation interval in the computation processing of the computation processing unit 30 according to the embodiment.

Fig. 14    diagrammatically shows a specific example of tables of adjustment processing of the vibration intensity measuring device according to the embodiment.

Fig. 15    is a diagram of an example of adjustment of parameters of the sensor unit 10 and the computation processing unit 30 in accordance with the tables in Fig. 14.

Fig. 16    is another diagram of adjustment of parameters of the sensor unit 10 and the computation processing unit 30 in accordance with the tables in Fig. 14.

Fig. 17    diagrammatically shows predetermined conditions (trigger conditions).

Fig. 18    shows diagrams for explaining setting of another range of natural period.

Fig. 19    shows diagrams for explaining a method for computing an SI value based on a curve of the maximum velocity value Sv vs. the natural period T.

Fig. 20    is a diagram for explaining, as a comparative example, the concept of conventional computation processing for calculating an SI value based on multi-axial acceleration data.

Fig. 21    shows diagrams for explaining an example of vector decomposition.

Fig. 22    is a diagram for explaining the concept of computation processing for calculating an SI value based on multi-axial acceleration data according to Modification 6 of the present invention.

Fig. 23    is a diagram for explaining the concept of computation processing for calculating an SI value based on multi-axial acceleration data according to another example of Modification 6.

Fig. 24    is a diagram for explaining changes in acceleration y(t) over time and the like that were observed when ground motion occurred.

Fig. 25    is a diagram for explaining computation processing based on time-series data on the acceleration y(t).

EMBODIMENTS OF THE PRESENT INVENTION

Hereinafter, an embodiment of the present invention will be described with reference to the drawings. When any reference to a number, an amount, and the like is made in the description of the embodiment, the scope of the present invention is not necessarily limited to that number, amount, and the like unless otherwise specified. The description of the embodiment denotes like components or corresponding components by like reference numerals, and may not repeat redundant descriptions. Unless otherwise limited, it is originally intended to use configurations shown in the embodiment in combination as appropriate.

1. Overall Configuration

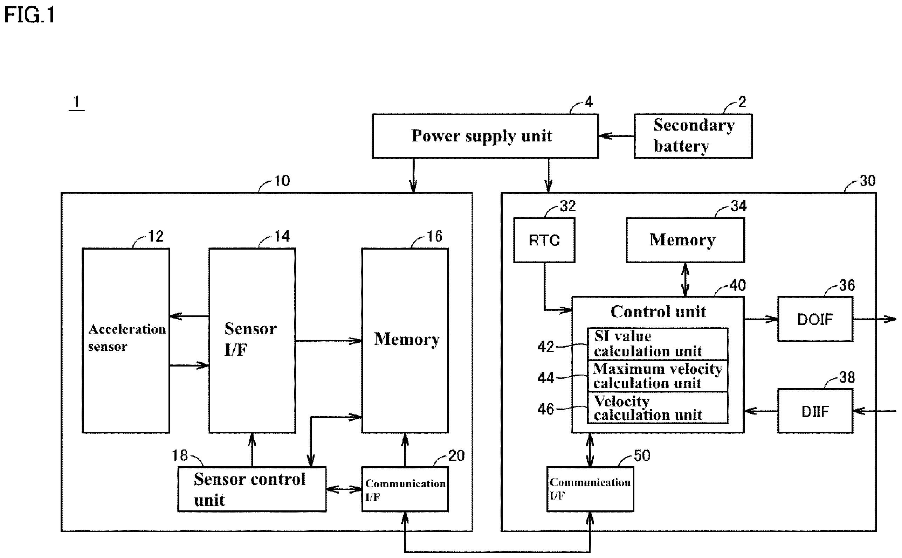

Fig. 1 is a schematic configuration diagram of a vibration intensity measuring device 1 according to the present embodiment.

Referring to Fig. 1, the vibration intensity measuring device 1 according to the present embodiment includes a sensor unit 10, a computation processing unit 30, a power supply unit 4, and a secondary battery 2.

The sensor unit 10 includes an acceleration sensor 12, a sensor I/F 14, a memory 16, a sensor control unit 18, and a communication I/F 20.

The acceleration sensor 12 is assumed to be a semiconductor acceleration sensor that has a triaxial (X-, Y-, and Z-axes) measurement capability and that outputs a detection signal (acceleration detection signal) in accordance with vibration. Note that acceleration sensors of a capacitive type, a piezoresistive type, a piezoelectric type, a gas temperature distribution type, and the like can be used. Although an acceleration sensor that has a triaxial measurement capability is described in the present example, the acceleration sensor is not particularly limited to a triaxial sensor and may be uniaxial or biaxial. Furthermore, a configuration that has a multi-axial (three or more axes) detection capability may also be adopted.

The sensor I/F 14 is a sensor interface that samples a detection signal, which is an output of the acceleration sensor 12, every $\Delta t$ and outputs acceleration data (performs A/D conversion). The acceleration data is stored in the memory 16.

The sensor control unit 18 is the unit that performs overall control of the sensor unit 10. In the present example, the sensor control unit 18 is assumed to be able to adjust (vary) the interval (hereinafter also referred to as "sampling interval") at which the detection signal is sampled, the detection signal being the output of the acceleration sensor 12, in accordance with an instruction from the computation processing unit 30.

The communication I/F 20 is an interface for communicating with the computation processing unit 30.

In the present example, the sensor control unit 18 is assumed to instruct the memory 16 to transmit the acceleration data stored in the memory 16 to the computation processing unit 30 via the communication I/F 20. Note that it is assumed that the communication interval at which data is transmitted from the sensor unit 10 to the computation processing unit 30 can be adjusted in accordance with an instruction from the computation processing unit 30.

Moreover, the sensor control unit 18 is assumed to accept an input of control data from the computation processing unit 30 via the communication I/F 20. As described later, in the present example, processing for adjusting various parameters of the sensor unit 10 is performed in accordance with a parameter adjustment instruction from the computation processing unit 30. Specifically, a parameter relating to acquisition of the acceleration detection signal of the sensor I/F 14 is adjusted in accordance with the control data from the computation processing unit 30. Specifically, the sampling interval at which the acceleration detection signal is sampled is adjusted. Moreover, a parameter relating to communication processing for transmitting the acceleration data to the computation processing unit 30 via the communication I/F 20 is adjusted in accordance with the control data from the computation processing unit 30. Specifically, the communication interval with respect to the acceleration data is adjusted.

The computation processing unit 30 includes a real-time clock (RTC) 32 serving as a time counter, a memory 34, a control unit 40, such as a central processing unit (CPU), to which various types of data are input and which computes various types of vibration characteristic values and outputs a discrimination signal in a digital (binary) form, a digital output interface DOIF 36 that outputs the discrimination signal to the outside, a digital input interface DIIF 38 to which a control signal from the outside is input, and a communication I/F 50. These units are assumed to be connected to the control unit 40.

A program for realizing various types of functions executed by the control unit 40 are stored in the memory 34, and the functions such as computation processing, which will be described later, are realized by loading the program. Moreover, the memory 34 can also be used as a working area in which the computation results and the like of the control unit 40 are stored.

The control unit 40 of the present example includes an SI value calculation unit 42 that computes the SI value, which is a measure of the intensity of ground motion, a velocity calculation unit 46 that computes the velocity, and a maximum velocity calculation unit 44 that computes the maximum velocity, these units being realized by executing the program. Moreover, although not shown, the control unit 40 realizes other functions that are necessary in order to control the vibration intensity measuring device 1. Note that although a vibration intensity measuring device that measures vibration of earthquakes is described in the present example, the present invention is not particularly limited to vibration of earthquakes and is equally applicable to measurement of various types of vibration.

The communication I/F 50 is an interface for communicating with the sensor unit 10. In the present example, the control unit 40 can transmit/receive the control data to/from the sensor unit 10 via the communication I/F 50.

The control unit 40 can accept an input of the acceleration data transmitted from the sensor unit 10 via the communication I/F 50 and execute predetermined computation processing.

Moreover, the vibration intensity measuring device 1 includes the power supply unit 4 to which power is supplied from the secondary battery 2, and the power supply unit 4 in turn supplies a voltage that is necessary to drive the sensor unit 10 and the computation processing unit 30. Note that although a case in which the power supply unit 4 is operated by power supplied from the secondary battery 2 is described in the present example, the present invention is not particularly limited to this case, and a configuration in which the power supply unit 4 is operated by power supplied from an external power supply may also be adopted. Moreover, the power supply is not limited to a secondary battery, and it goes without saying that a configuration in which a primary battery or the like is used can also be adopted.

The digital input interface (DIIF) 38 is connected to an external apparatus and accepts an input from that apparatus.

The digital output interface (DOIF) 36 is connected to the external apparatus and instructs an operation to that apparatus. In the present example, a case in which the vibration intensity measuring device 1 is provided in a gas supply system, and the supply of the gas is stopped by controlling an emergency shutdown valve in accordance with a signal output from the vibration intensity measuring device 1 is described by way of example. Note that the vibration intensity measuring device 1 may be used in various ways, and is applicable to various systems, rather than being particularly applied only to a gas supply system. Moreover, in the present example, since the vibration intensity measuring device 1 is configured to be driven by a secondary battery, the vibration intensity measuring device 1 has ease of attachment and therefore has a wide variety of uses.

2. Flow of Processing

2.1 Overview

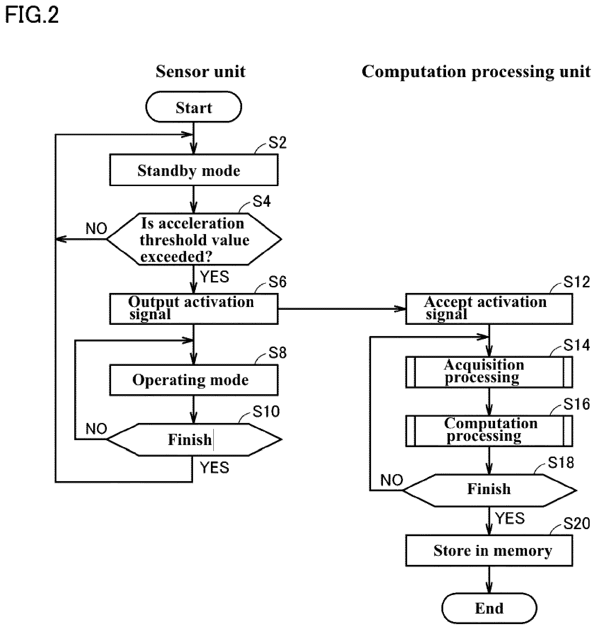

Fig. 2 is a flow diagram for explaining an example of the outline of the flow of processing of the vibration intensity measuring device 1 according to the present embodiment.

Referring to Fig. 2, the flow of processing of the sensor unit 10 will be described first.

The sensor unit 10 is assumed to be initially in a standby mode (step S2). The sensor unit 10 is assumed to be set to the low-power consumption standby mode in an initial state. Then, if it is judged that an earthquake occurred, the sensor unit 10 is assumed to shift to an operating mode. Specifically, in the present example, the sensor I/F 14, in the standby mode, samples the detection signal (acceleration detection signal), which is an output of the acceleration sensor 12, at a long sampling interval. Then, processing for storing the acceleration data in the memory 16 is executed.

Next, the sensor unit 10 judges whether the acceleration data stored in the memory 16 exceeds a threshold value (step S4). The threshold value is assumed to be set at such a value that if this threshold value is exceeded, it is highly likely to be judged that an earthquake occurred. Specifically, the sensor control unit 18 is assumed to compare the acceleration data stored in the memory 16 with data that serves as the threshold value, thereby judging whether the acceleration data exceeds the threshold value.

Next, in step S4, if the sensor unit 10 judges that the acceleration data exceeds the threshold value (YES in step S4), the processing proceeds to step S6.

On the other hand, in step S4, if the sensor unit 10 judges that the acceleration data does not exceed the threshold value (No in step S4), the processing returns to step S2. The acceleration data that does not exceed the threshold value is judged to be affected by a noise or a disturbance, and the standby mode is maintained.

Next, in step S6, the sensor unit 10 outputs an activation signal. Specifically, the sensor control unit 18 outputs (notifies) an activation signal to the computation processing unit 30 via the communication I/F 20.

Next, the sensor unit 10 shifts to the operating mode (step S8). Specifically, the sensor unit 10 shifts from the standby mode to the operating mode. In this operating mode, the detection signal, which is the output of the acceleration sensor 12, is sampled at a short sampling interval. Then, processing for storing the acceleration data into the memory 16 is executed.

Next, the sensor unit 10 judges whether the processing is finished (step S10). Specifically, the sensor control unit 18 judges whether the processing is finished, that is, whether the ground motion has ended, in accordance with the acceleration data stored in the memory 16. For example, the judgement may be performed in accordance with whether the acceleration data is below or equal to the threshold value.

In step S10, if the sensor unit 10 judges that the processing is not finished (NO in step S10), the processing returns to step S8, and the operating mode in step S8 is maintained.

On the other hand, in step S10, if the sensor unit 10 judges that the processing is finished (YES in step S10), the processing returns to step S2 again, and the sensor unit 10 shifts to the standby mode and returns to the initial state.

Next, the flow of processing of the computation processing unit 30 will be described.

First, the computation processing unit 30 accepts the activation signal output from the sensor unit 10 (step S12).

Then, the computation processing unit 30 is activated in accordance with the accepted activation signal and executes the acquisition processing first (step S14). Specifically, the computation processing unit 30 communicates with the sensor unit 10 and acquires the acceleration data transmitted from the sensor unit 10. The details of the acquisition processing will be described later.

Next, the computation processing unit 30 executes the computation processing based on the acquired data (step S16). The details of the computation processing will be described later.

Subsequently, the computation processing unit 30 judges whether the processing is finished (step S18). Specifically, it is judged whether the computation processing of SI values with respect to all the acquired acceleration data is finished.

Then, in step S18, if the computation processing unit 30 judges that the processing is finished (YES in step S18), the computation results are stored in the memory (step S20). For example, a configuration may be adopted in which the computation results that are stored in the memory at this time are output to a management device or the like of a superordinate system.

Then, the processing is finished (End). That is to say, the activation is finished, and the mode is shifted to a low-power consumption mode. The power consumption can be reduced by this processing.

On the other hand, in step S18, if the computation processing unit 30 judges that the processing is not finished (NO in step S18), the processing returns to step S14, and the above-described acquisition processing and computation processing are repeated.

2.2 Acquisition Processing

Next, the acquisition processing in step S14 of Fig. 2 will be described.

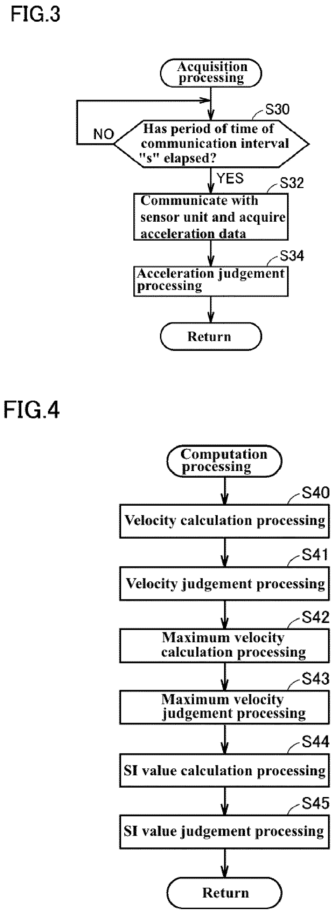

Fig. 3 is a diagram for explaining the flow of the acquisition processing of the computation processing unit 30 according to the present embodiment. This processing is mainly performed by the control unit 40.

Referring to Fig. 3, first, it is judged whether the time period of a communication interval "s" has elapsed (step S30). Step S30 is maintained until the time period of the communication interval "s" elapses. Note that for calculation or the like of this time period, measurement can be performed in accordance with a clock signal from the RTC 32. The same applies to other time periods and the like. Note that usage of the clock signal from the RTC 32 for calculation or the like of a time period is not necessarily required, and the measurement may also be performed using other means.

In step S30, if it is judged that the time period of the communication interval "s" has elapsed (YES in step S30), the computation processing unit 30 communicates with the sensor unit 10 and acquires the acceleration data (step S32). The acquired acceleration data is assumed to be stored in the memory 34.

Then, with respect to the acquired acceleration data, acceleration judgement processing is executed (step S34). Specifically, it is judged whether or not the acceleration data satisfies a predetermined condition. The judgement processing will be described later. Note that although a case in which the acceleration judgement processing is executed after the acquisition of the acceleration data is described in the present example, execution of the judgement processing is not necessarily required, and it is also possible that the processing is finished after the acquisition of the acceleration data.

Then, the processing is finished (Return).

2.3 Computation Processing

Next, the computation processing in step S16 of Fig. 2 will be described.

Fig. 4 is a diagram for explaining the flow of the computation processing of the computation processing unit 30 according to the present embodiment. This processing is mainly executed by the velocity calculation unit 46, the maximum velocity calculation unit 44, and the SI value calculation unit 42 of the control unit 40.

Referring to Fig. 4, velocity calculation processing for calculating a velocity value based on the acceleration data is executed (step S40). This calculation processing is assumed to be executed by the velocity calculation unit 46 of the control unit 40. With respect to the method for velocity calculation, integration based on Equation (1), for example, can be used.

Next, velocity judgement processing for judging the calculated velocity value is executed (step S41). Specifically, it is judged whether or not the calculated velocity value satisfies a predetermined condition. The judgement processing will be described later. Note that although a case in which the velocity judgement processing is executed after the calculation of the velocity value is described in the present example, execution of the judgement processing is not necessarily required, and the judgement processing may be skipped after the calculation of the velocity value.

Next, maximum velocity calculation processing for calculating a maximum velocity value based on the calculated velocity values is executed (step S42). This calculation processing is assumed to be executed by the maximum velocity calculation unit 44 of the control unit 40. With respect to the method for calculation of the maximum velocity value, Equation (2), for example, can be used.

Next, maximum velocity judgement processing for judging the calculated maximum velocity value is executed (step S43). Specifically, it is judged whether or not the calculated maximum velocity value satisfies a predetermined condition. The judgement processing will be described later. Note that although a case in which the maximum velocity judgement processing is executed after the calculation of the maximum velocity value is described in the present example, execution of the judgement processing is not necessarily required, and the judgement processing may be skipped after the calculation of the maximum velocity value.

Next, SI value calculation processing for calculating an SI value based on the maximum velocity values is executed (step S44). This calculation processing is assumed to be executed by the SI value calculation unit 42 of the control unit 40. With respect to the method for calculation of the SI value, Equation (3), for example, can be used.

Next, SI value judgement processing for judging the calculated SI value is executed (step S45). Specifically, it is judged whether or not the calculated SI value satisfies a predetermined condition. The judgement processing will be described later. Note that although a case in which the SI value judgement processing is executed after the calculation of the SI value is described in the present example, execution of the judgement processing is not necessarily required, and the processing may be finished by skipping this judgement processing after the calculation of the SI value.

Then, the processing is finished (Return).

2.4 Judgement Processing

Next, the judgement processing in Figs. 3 and 4 will be described.

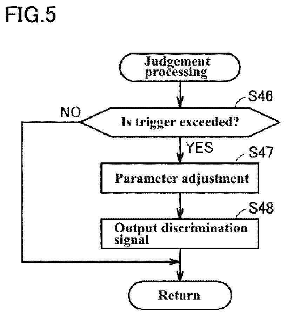

Fig. 5 is a diagram for explaining a general flow of the judgement processing according to the present embodiment.

Referring to Fig. 5, it is judged whether a predetermined condition is satisfied, that is, for example, whether a trigger serving as the predetermined condition is exceeded (step S46).

In step S46, if it is judged that the trigger is exceeded (YES in step S46), parameter adjustment is performed (step S47). For example, a parameter for use in the acquisition processing for acquiring the acceleration data, the computation processing of the SI value or the like, or other processing is adjusted. Note that although a case in which parameter adjustment is performed is described here by way of example, the object to be adjusted is not particularly limited to a parameter, and the method for computation processing, the method for correction, and the like may also be adjusted (changed).

Next, a discrimination signal is output (step S48). Specifically, a discrimination signal indicating that the trigger is exceeded is output. Note that this discrimination signal is not necessarily required to be output, and can be output if necessary.

Then, the processing is finished (Return).

In this judgement processing, with respect to each of the various types of values such as the acceleration, the velocity value, the maximum velocity value, and the SI value, it is judged whether a predetermined condition is satisfied. Although examples of the judgement processing are shown in the above-described flow diagrams in Figs. 3 and 4, execution of the judgement processing is not necessarily required, as described above. For example, in Fig. 4, a combination may be adopted in which while the judgement processing in step S41 is performed, the judgement processing in step S43 is not performed.

In the present example, mainly the SI value judgement processing and the maximum velocity judgement processing of the above-described various types of judgement processing will be described.

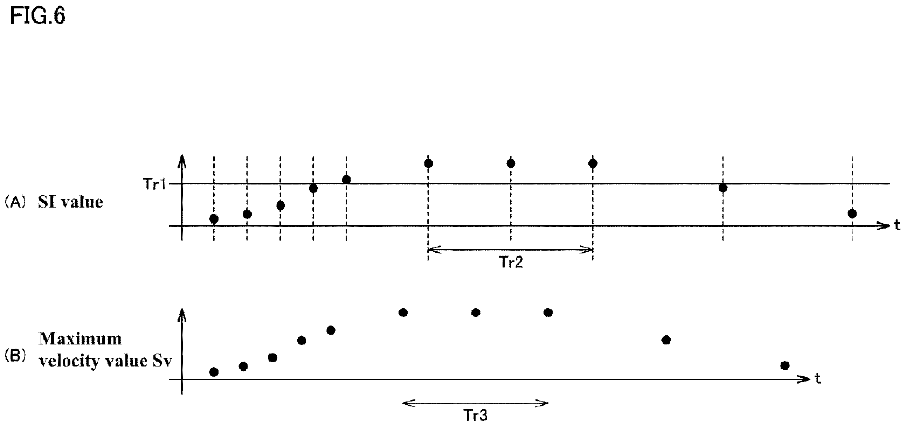

Fig. 6 shows diagrams for explaining predetermined conditions for use in the judgement processing according to the present embodiment.

Referring to Fig. 6(A), here, SI values calculated by the computation processing unit 30 are shown over time. The vertical axis represents SI value, and the horizontal axis represents time "t".

In the present example, as an example of the predetermined conditions for use in the SI value judgement processing, a threshold value Tr1 is set as a threshold value of the SI value. In other words, in the present embodiment, it is assumed that the operating mode is switched between the case in which the SI value is less than or equal to the threshold value Tr1 and the case in which the SI value exceeds the threshold value Tr1.

In the present example, it is assumed that when, for example, the vibration intensity measuring device 1 is disposed in a gas supply system, the threshold value Tr1 is used to judge whether the supply of the gas is to be stopped by controlling an emergency shutdown valve of the gas supply system. That is to say, the threshold value Tr1 is assumed to be used as a threshold value in detection of whether or not the size of an earthquake exceeds a critical level. It is assumed that if an SI value exceeding this threshold value Tr1 is detected, the vibration intensity measuring device 1 outputs an emergency discrimination signal to the emergency shutdown valve, and the emergency shutdown valve stops the supply of the gas in response to that signal.

Also, as another example of the predetermined conditions, a threshold value Tr2 is set as a threshold value of a time period for which the SI value is not updated. In other words, in the present embodiment, it is assumed that the operating mode is switched between the case in which the time period for which the SI value is not updated is less than or equal to the threshold value Tr2 and the case in which the time period for which the SI value is not updated exceeds Tr2.

In the present example, the threshold value Tr2 is assumed to be used as, for example, a judgement condition with respect to whether ground motion comes to an end.

Referring to Fig. 6(B), here, maximum velocity values calculated by the computation processing unit 30 are shown over time. The vertical axis represents maximum velocity value Sv, and the horizontal axis represents time "t".

Furthermore, as an example of the predetermined conditions for use in the maximum velocity judgement processing, a threshold value Tr3 is set as a threshold value of a time period for which the maximum velocity value Sv is not updated. In other words, in the present embodiment, it is assumed that the operating mode is switched between the case in which the time period for which the maximum velocity value Sv is not updated is less than or equal to the threshold value Tr3 and the case in which the time period for which the maximum velocity value Sv is not updated exceeds the threshold value Tr3.

In the present example, the threshold value Tr3 is assumed to be used as a judgement condition with respect to, for example, whether ground motion comes to an end, as in the case of the threshold value Tr2.

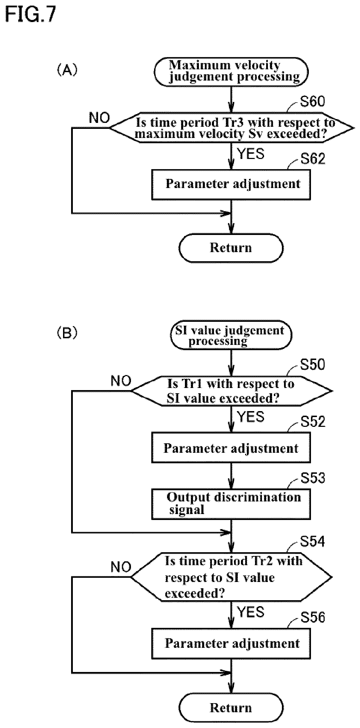

Fig. 7 shows diagrams for explaining the flow of the judgement processing of the computation processing unit 30 according to the present embodiment. This processing is mainly performed by the control unit 40.

Referring to Fig. 7(A), the flow of the maximum velocity judgement processing is shown here.

First, it is judged whether the threshold value Tr3, which is the threshold value of the time period for which the maximum velocity value Sv is not updated, is exceeded (step S60).

In step S60, if it is judged that the threshold value Tr3 of the time period for which the maximum velocity value Sv is not updated is exceeded, parameter adjustment is performed (step S62). Parameter adjustment will be described later.

On the other hand, in step S60, if it is judged that the threshold value Tr3 of the time period for which the maximum velocity value Sv is not updated is not exceeded, step S60 is skipped to finish the processing (Return).

Referring to Fig. 7(B), the flow of the SI value judgement processing is shown here.

First, it is judged whether an SI value exceeds the threshold value Tr1 (step S50).

In step S50, if it is judged that the SI value exceeds the threshold value Tr1, parameter adjustment is performed (step S52). Parameter adjustment will be described later.

Next, a discrimination signal is output (step S53). Specifically, a discrimination signal for stopping the supply of the gas by controlling the emergency shutdown valve is output. For example, this discrimination signal is assumed to be output from the control unit 40 via the DOIF 36. Note that although a case in which the processing in step S53 is executed is described in the present example, a configuration in which the discrimination signal is not output may also be adopted depending on the system.

On the other hand, in step S50, if it is judged that the SI value does not exceed the threshold value Tr1, the above-described steps S52 and S53 are skipped to advance the processing to step S54.

Next, it is judged whether the threshold value Tr2, which is the threshold value of the time period for which the SI value is not updated, is exceeded (step S54).

In step S54, if it is judged that the threshold value Tr2 of the time period for which the SI value is not updated is exceeded, parameter adjustment is performed (step S56). Parameter adjustment will be described later.

On the other hand, in step S54, if it is judged that the threshold value Tr2 of the time period for which the SI value is not updated is not exceeded, step S56 is skipped to finish the processing (Return).

Note that although a case in which the two predetermined conditions are set as the judgement condition is described in the present example, the judgement condition is not required to be particularly limited to this configuration, and it is sufficient if one of the predetermined conditions is included. Alternatively, a plurality of further conditions can also be set.

Note that although the flows of the SI value judgement processing and the maximum velocity judgement processing of the above-described various type of judgement processing are mainly described in the present example, in the flow of the other types of judgement processing as well, it is judged whether or not a predetermined condition is satisfied, and if the condition is satisfied, parameter adjustment is performed.

3. Outline of Parameter Adjustment

3.1 Adjustment of Sampling Interval

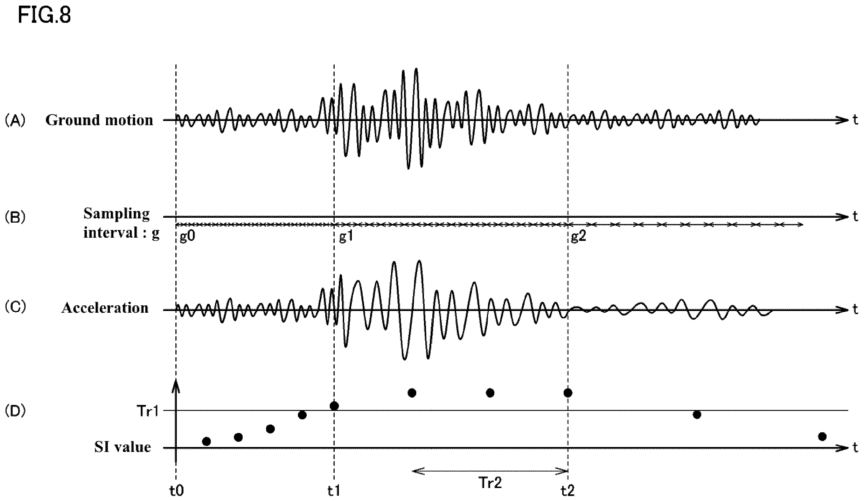

Fig. 8 is a diagram for explaining adjustment of parameters in the operating mode of the sensor unit 10 according to the present embodiment.

Referring to Fig. 8, a case in which the sampling processing of the sensor unit 10 is adjusted is shown here.

In the present example, (A) waveform of ground motion, (B) sampling interval, (C) value of acceleration data, and (D) SI value are shown over time.

First, it is assumed that at time t0, ground motion occurs, and the sensor unit 10 shifts from the standby mode to the operating mode. It is assumed that the sampling interval "g" after the shift to the operating mode is g0 (0.01 s), for example. That is to say, sampling is performed at a short sampling interval. Then, the acceleration data is stored in the memory 16.

Moreover, it is assumed that upon detection of the occurrence of an earthquake, the activation signal is output to the computation processing unit 30. Thus, the computation processing unit 30 is activated. The computation processing unit 30 acquires the acceleration data as described above, executes the computation processing, and repeats this processing. SI values are calculated by the computation processing.

Next, a case in which an SI value calculated by the computation processing unit 30 exceeds the threshold value Tr1 at time t1 is shown. That is to say, in the above-described judgement processing, it is judged that the SI value exceeds the threshold value Tr1. Thus, parameter adjustment is performed. In the present example, the computation processing unit 30 instructs the sensor unit 10 to perform the parameter adjustment in such a manner as to adjust the sampling interval. Specifically, an instruction to set the sampling interval to a sampling interval g1 (0.02 s) is issued.

According to this instruction, during a time period after time t1, the acceleration detection signal is sampled in accordance with the sampling interval g1, and the acceleration data is stored in the memory 16.

If the SI value exceeds the threshold value Tr1, the discrimination signal is output to the emergency shutdown valve as described above. Thus, the supply of the gas is stopped. Therefore, it is conceivable that in the case in which the vibration intensity measuring device is used in the gas supply system, the output of further emergency information is not necessary after the discrimination signal is output (after the supply of the gas is stopped). That is to say, in this situation, accurate measurement is not strictly required, and thus power consumption can be reduced by adjusting the sampling interval to suppress the computation load.

Next, with regard to the SI values calculated by the computation processing unit 30, a case in which the threshold value Tr2 of the time period for which the SI value is not updated is exceeded at time t2 is shown. That is to say, in the above-described judgement processing, it is judged that the threshold value Tr2 of the time period for which the SI value is not updated is exceeded. Thus, parameter adjustment is performed. In the present example, the computation processing unit 30 instructs the sensor unit 10 to perform the parameter adjustment in such a manner as to adjust the sampling interval. Specifically, an instruction to set the sampling interval to a sampling interval g2 (0.04 s) is issued.

According to this instruction, during a time period after time t2, the acceleration detection signal is sampled in accordance with the sampling interval g2, and the acceleration data is stored in the memory 16.

The case in which the threshold value Tr2 of the time period for which the SI value is not updated is exceeded can be regarded as the case in which the ground motion comes to an end as described above. Accordingly, in this situation, accurate measurement is not strictly required, and thus power consumption can be reduced even more by adjusting the sampling interval to suppress the computation load.

Therefore, in the present example, the sampling interval can be adjusted in accordance with the state of ground motion. That is to say, the computation load that is applied is not constant all the time during the occurrence of ground motion. Instead, accurate measurement is executed at a short sampling interval from the onset of the ground motion until a predetermined condition is satisfied (until whether or not the size of the earthquake exceeds a critical level is detected), and then if the predetermined condition is satisfied, the sampling interval is increased stepwise. In this manner, the computation load is suppressed, and thus a low-power consumption operation can be realized.

3.2 Adjustment of Communication Interval

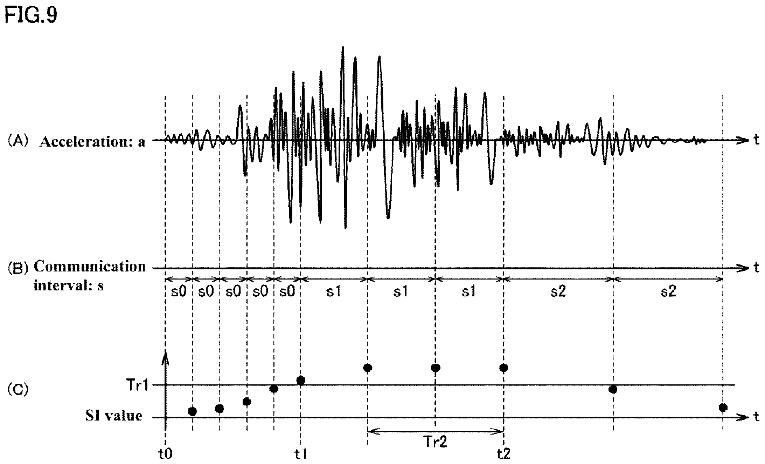

Fig. 9 is a diagram for explaining adjustment of parameters of communication processing between the sensor unit 10 and the computation processing unit 30 according to the present embodiment.

Referring to Fig. 9, here, a case in which the interval of communication between the sensor unit 10 and the computation processing unit 30 is adjusted is shown.

In the present example, (A) value of acceleration data, (B) communication interval, and (C) SI value are shown over time.

First, it is assumed that at time t0, ground motion occurs, and the sensor unit 10 shifts from the standby mode to the operating mode. The communication interval "s" after the shift to the operating mode is assumed to be s0. That is to say, the communication interval is set to a short time, and the communication processing with the computation processing unit 30 with respect to the acceleration data is executed at high speed.

Moreover, it is assumed that upon detection of the occurrence of the earthquake, the activation signal is output to the computation processing unit 30. Thus, the computation processing unit 30 is activated. The computation processing unit 30 acquires the acceleration data as described above, executes the computation processing, and repeats this processing. SI values are calculated by the computation processing.

Next, a case in which an SI value calculated by the computation processing unit 30 exceeds the threshold value Tr1 at time t1 is shown. That is to say, in the above-described judgement processing, it is judged that the SI value exceeds the threshold value Tr1. Thus, parameter adjustment is performed. In the present example, the computation processing unit 30 instructs the sensor unit 10 to perform the parameter adjustment in such a manner as to adjust the communication interval. Specifically, an instruction to set the communication interval "s" to s1 (>s0) is issued.

According to this instruction, during a time period after time t1, the communication processing with the computation processing unit 30 with respect to the acceleration data is executed in accordance with the communication interval s1.

If the SI value exceeds the threshold value Tr1 as described above, the discrimination signal is output to the emergency shutdown valve as described above. Accordingly, it is conceivable that the output of further emergency information is not necessary after the discrimination signal is output (after the supply of the gas is stopped). That is to say, in this situation, accurate measurement is not strictly required, and thus power consumption can be reduced by adjusting the communication interval to suppress the communication load.

Next, with regard to the SI values calculated by the computation processing unit 30, a case in which the threshold value Tr2 of the time period for which the SI value is not updated is exceeded at time t2 is shown. That is to say, in the above-described judgement processing, it is judged that the threshold value Tr2 of the time period for which the SI value is not updated is exceeded. Thus, parameter adjustment is performed. In the present example, the computation processing unit 30 instructs the sensor unit 10 to perform the parameter adjustment in such a manner as to adjust the communication interval. Specifically, an instruction to set the communication interval "s" to s2 (>s1) is issued.

According to this instruction, during a time period after time t2, the communication processing with the computation processing unit 30 with respect to the acceleration data is executed in accordance with the communication interval s2.

The case in which the threshold value Tr2 of the time period for which the SI value is not updated is exceeded can be regarded as the case in which the ground motion comes to an end as described above. Accordingly, in this situation, accurate measurement is not strictly required, and thus power consumption can be reduced even more by adjusting the communication interval to suppress the communication load.

Therefore, in the present example, the communication interval of the communication processing between the sensor unit 10 and the computation processing unit 30 can be adjusted in accordance with the state of ground motion. That is to say, the communication load that is applied is not constant all the time during the occurrence of ground motion. Instead, information is exchanged at a fast communication interval from the onset of the ground motion until a predetermined condition is satisfied (until whether or not the size of the earthquake exceeds a critical level is detected), and then if the predetermined condition is satisfied, the communication interval is increased stepwise. In this manner, the communication load is suppressed, and thus a low-power consumption operation can be realized.

3.3 Adjustment of Number of Natural Period Velocities

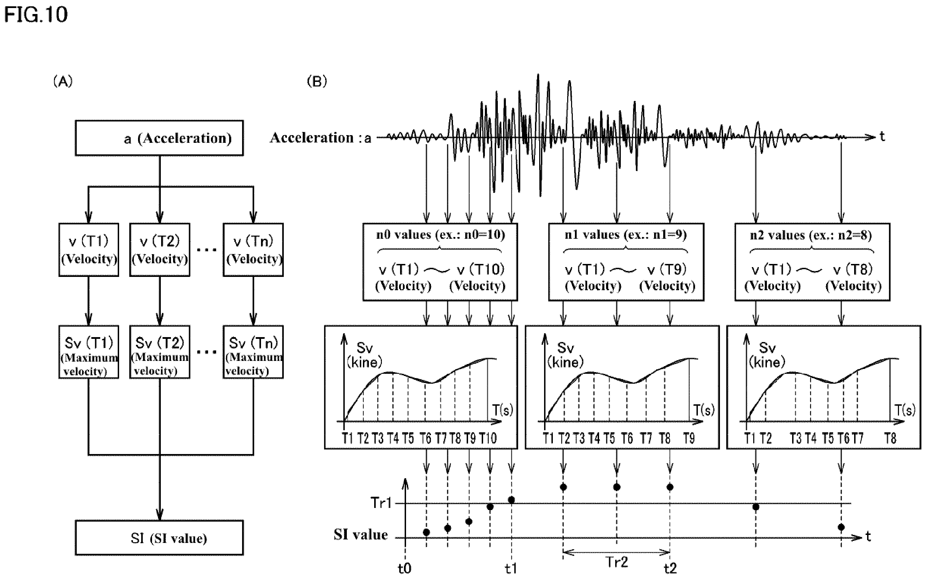

Fig. 10 shows diagrams for explaining adjustment of the number of natural period velocities in the computation processing of the computation processing unit 30 according to the present embodiment.

Referring to Fig. 10(A), here, the concept of the computation processing is diagrammatically shown.

Specifically, a case is shown in which velocity values v(T1) to v(Tn) associated with a natural period T are individually calculated based on the acceleration data "a", maximum velocity values Sv(T1) to Sv(Tn) are individually calculated based on the calculated velocity values v(T1) to v(Tn), and an SI value is calculated based on the maximum velocity values Sv(T1) to Sv(Tn).

Referring to Fig. 10(B), here, the acceleration data over time and adjustment of the computation processing are schematically shown.

First, it is assumed that at time t0, ground motion occurs, and the sensor unit 10 shifts from the standby mode to the operating mode. Also, it is assumed that upon detection of the occurrence of the earthquake, the activation signal is output to the computation processing unit 30. Thus, the computation processing unit 30 is activated. The computation processing unit 30 acquires the acceleration data as described above, executes the computation processing, and repeats this processing. Velocity values "v", maximum velocity values Sv, and SI values are calculated by the computation processing.

Here, a case is shown in which, in an initial state of the processing for calculating a maximum velocity value, the number "n" of natural period velocities to be calculated is set to n0 (ten). The maximum velocity value is calculated from that number of natural period velocities.

Next, a case is shown in which an SI value calculated by the computation processing unit 30 exceeds the threshold value Tr1 at time t1. That is to say, in the above-described judgement processing, it is judged that the SI value exceeds the threshold value Tr1. Thus, parameter adjustment is performed. In the present example, the computation processing unit 30 adjusts a parameter of the computation processing. Specifically, during a time period after time t1, the maximum velocity value Sv is calculated while setting the number "n" of natural period velocities to be calculated to n1 (nine).

If the SI value exceeds the threshold value Tr1 as described above, the discrimination signal is output to the emergency shutdown valve as described above. Accordingly, it is conceivable that the output of further emergency information is not necessary after the discrimination signal is output (after the supply of the gas is stopped). That is to say, in this situation, accurate measurement is not strictly required, and thus power consumption can be reduced by adjusting the number of data items to be used to suppress the computation load.

Next, a case is shown in which, with regard to the SI values calculated by the computation processing unit 30, the threshold value Tr2 of the time period for which the SI value is not updated is exceeded at time t2. That is to say, in the above-described judgement processing, it is judged that the threshold value Tr2 of the time period for which the SI value is not updated is exceeded. Thus, parameter adjustment is performed. In the present example, the computation processing unit 30 adjusts a parameter of the computation processing. Specifically, during a time period after time t2, the maximum velocity value is calculated while setting the number "n" of natural period velocities to be calculated to n2 (eight).

The case in which the threshold value Tr2 of the time period for which the SI value is not updated is exceeded can be regarded as the case in which the ground motion comes to an end as described above. Accordingly, in this situation, accurate measurement is not strictly required, and thus power consumption can be reduced even more by adjusting the number of data items to be used to suppress the computation load.

Therefore, in the present example, the computation load of the computation processing of the computation processing unit 30 can be adjusted in accordance with the state of ground motion. That is to say, the computation load that is applied is not constant all the time during the occurrence of the ground motion. Instead, accurate computation processing is executed from the onset of the ground motion until a predetermined condition is satisfied (until whether or not the size of the earthquake exceeds a critical level is detected), and if the predetermined condition is satisfied, the number of data items to be used is reduced stepwise. In this manner, the computation load is suppressed, and thus a low-power consumption operation can be realized.

3.4 Description of Method for Saving Maximum Velocity Value

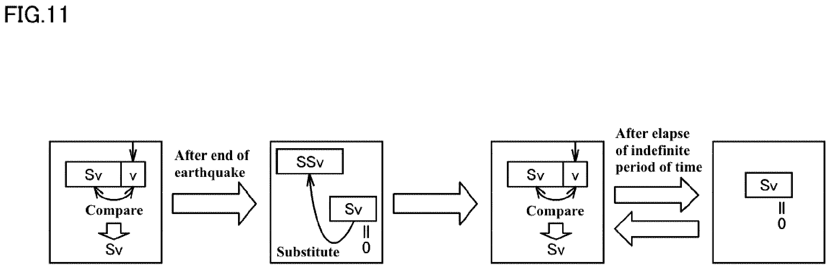

Fig. 11 is a diagram for explaining a method for saving a maximum velocity value according to the present embodiment.

Referring to Fig. 11, in the method for saving a maximum velocity value, first, an initially calculated velocity value "v" is set as the maximum velocity value Sv and saved. After that, each time a velocity value "v" is calculated, the absolute value of that velocity value "v" is compared with the maximum velocity value Sv, and based on the comparison result, if that velocity value "v" is an update on the maximum velocity value Sv, the maximum velocity value Sv is updated. Then, this processing is repeated. If it is judged that the earthquake has ended (e.g., if the time period for which the maximum velocity value Sv is not updated exceeds the threshold value Tr3), the maximum velocity value Sv is stored as the maximum velocity of that earthquake, that is, the earthquake's maximum velocity value SSv. Then, the value of the maximum velocity value is set to an initial value 0. Again, a calculated velocity value "v" is set as the maximum velocity value Sv, and thereafter each time a velocity value "v" is calculated, the absolute value of that velocity value "v" is compared with the maximum velocity value Sv, and based on the comparison result, if that velocity value "v" is an update on the maximum velocity value Sv, the maximum velocity value Sv is updated. Then, after an indefinite period of time has elapsed, this processing is repeated.

In this method, if it is judged that an earthquake has ended, the maximum velocity value Sv can be saved as the earthquake's maximum velocity value SSv. Accordingly, the earthquake's maximum velocity value SSv can be saved, and important information can be retained. Moreover, it is not necessary to store all of the velocity values, but rather a maximum value is stored, and thus the memory requirement can also be reduced. With the reduction in the memory requirement, power consumption can also be reduced.

Note that after the earthquake's maximum velocity value SSv is stored, if a maximum velocity value Sv exceeds that earthquake's maximum velocity value SSv, the earthquake's maximum velocity value SSv can also be updated.

3.5 Adjustment of Measurement Interval of Maximum Velocity Value

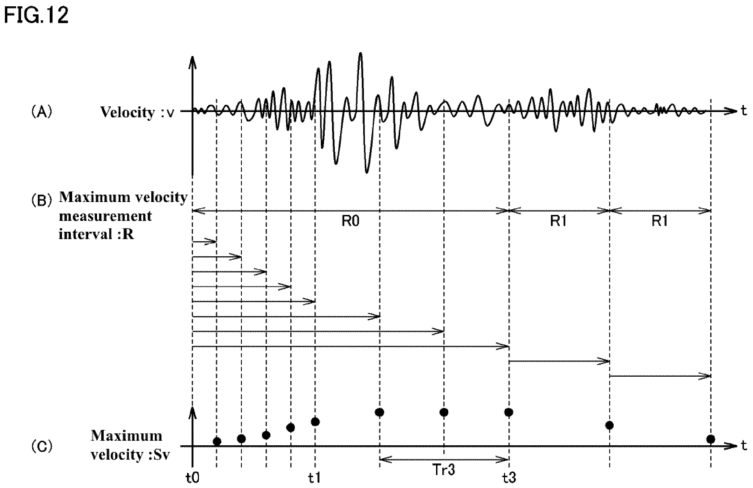

Fig. 12 is a diagram for explaining adjustment of the interval at which the maximum velocity value is measured in the computation processing of the computation processing unit 30 according to the present embodiment.

Referring to Fig. 12, here, a case in which an interval at which the computation processing unit 30 measures the maximum velocity value is adjusted is shown.

In the present example, (A) velocity value "v", (B) maximum velocity measurement interval, and (C) maximum velocity value Sv are shown over time.

First, it is assumed that at time t0, ground motion occurs, and the sensor unit 10 shifts from the standby mode to the operating mode. Also, it is assumed that upon detection of the occurrence of the earthquake, the activation signal is output to the computation processing unit 30. Thus, the computation processing unit 30 is activated. The computation processing unit 30 acquires the acceleration data as described above, executes the computation processing, and repeats this processing. Velocity values "v" and maximum velocity values Sv are calculated by the computation processing.

Here, a case is shown in which, in an initial state of the processing for calculating a maximum velocity value, the interval (period of time) of measurement of the maximum velocity value is set to R0. The maximum velocity measurement interval: R refers to the timing at which the maximum velocity is reset, and the maximum velocity value Sv is reset to the initial value 0 at each maximum velocity measurement interval R. For example, R0 is set to a period of time that elapses before the threshold value Tr3 is exceeded. Then, processing for obtaining a velocity value "v" from the acceleration data, comparing the calculated velocity value "v" with the maximum velocity value Sv, and updating the maximum velocity value Sv if that velocity value "v" is an update on the maximum velocity value Sv based on the comparison result is executed.

Next, a case is shown in which, with regard to the maximum velocity values calculated by the computation processing unit 30, the time period for which the maximum velocity value Sv is not updated exceeds the threshold value Tr3 at time t3. That is to say, in the above-described judgement processing, it is judged that the time period for which the maximum velocity value Sv is not updated exceeds the threshold value Tr3. Thus, parameter adjustment is performed.

In the present example, the computation processing unit 30 adjusts a parameter of the computation processing. Specifically, during a time period after time t3, the interval at which the maximum velocity value is measured, that is, the period of time R is set to a period of time R1 (e.g., 10 seconds). Moreover, since the time period exceeds the threshold value Tr3, that is, R0 has elapsed, the maximum velocity value Sv is reset to the initial value 0.

Then, the following processing is performed: a velocity value "v" is obtained from the acceleration data again, the calculated velocity value "v" is compared with the maximum velocity value Sv, and based on the comparison result, if that velocity value "v" is an update on the maximum velocity value Sv, the maximum velocity value Sv is updated. Then, when R1 (e.g., 10 seconds) has elapsed, the maximum velocity value Sv is reset to the initial value 0. Then, this processing is repeated.

Therefore, in the present example, the maximum velocity measurement interval R, which is the interval at which the maximum velocity value Sv is reset, can be changed as desired in accordance with the state of ground motion.

Note that the interval R at which the maximum velocity value is measured may be a fixed value that is set in advance or may be set in association with other computation intervals with respect to the acceleration, the velocity, the SI value, and the like.

3.6 Adjustment of Velocity Computation Interval and SI Value Computation Interval

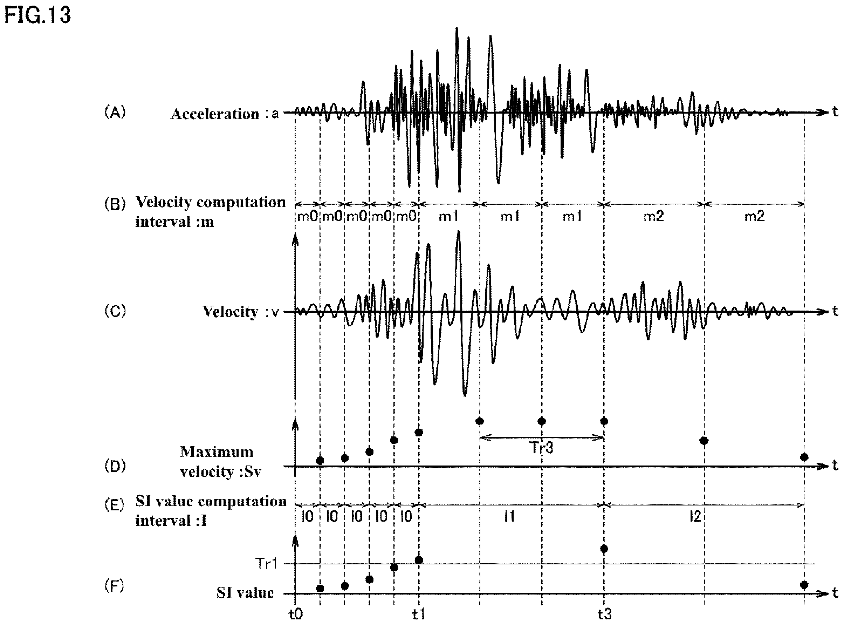

Fig. 13 is a diagram for explaining adjustment of the computation intervals of the computation processing of the computation processing unit 30 according to the present embodiment.

In the present example, (A) value of acceleration data, (B) velocity computation interval "m", (C) velocity value "v", (D) maximum velocity value Sv, (E) SI value computation interval "l", and (F) SI value are shown over time.

First, it is assumed that at time t0, ground motion occurs, and the sensor unit 10 shifts from the standby mode to the operating mode. Also, it is assumed that upon detection of the occurrence of the earthquake, the activation signal is output to the computation processing unit 30. Thus, the computation processing unit 30 is activated. The computation processing unit 30 acquires the acceleration data as described above, executes the computation processing, and repeats this processing. Velocity values "v", maximum velocity values Sv, and SI values are calculated by the computation processing.

Next, a case is shown in which an SI value calculated by the computation processing unit 30 exceeds the threshold value Tr1 at time t1. That is to say, in the above-described judgement processing, it is judged that the SI value exceeds the threshold value Tr1. Thus, parameter adjustment is performed. In the present example, the computation processing unit 30 adjusts a parameter of the computation processing. Specifically, during a time period after time t1, the velocity computation interval "m", which is the interval at which the velocity value is computed, is set to m1 (>m0). Moreover, during the time period after time t1, the SI value computation interval "l", which is the interval at which the SI value is computed, is set to l1 (>l0).

According to that instruction, during the time period after time t1, the velocity value calculation processing of the computation processing unit 30 is executed in accordance with the velocity computation interval m1. Moreover, according to that instruction, during the time period after time t1, the velocity value calculation processing of the computation processing unit 30 is executed in accordance with the SI value computation interval l1.

If the SI value exceeds the threshold value Tr1 as described above, the discrimination signal is output to the emergency shutdown valve as described above. Accordingly, it is conceivable that the output of further emergency information is not necessary after the discrimination signal is output (after the supply of the gas is stopped). That is to say, in this situation, accurate measurement is not strictly required, and thus power consumption can be reduced by adjusting the interval of velocity value computation to suppress the computation load.

Then, a case is shown in which, with regard to the maximum velocity values Sv calculated by the computation processing unit 30, the time period for which the maximum velocity value Sv is not updated exceeds the threshold value Tr3 at time t3. That is to say, in the above-described judgement processing, it is judged that the time period for which the maximum velocity value Sv is not updated exceeds the threshold value Tr3. Thus, parameter adjustment is performed. In the present example, the computation processing unit 30 adjusts a parameter of the computation processing. Specifically, during a time period after time t3, the velocity computation interval "m", which is the interval at which the velocity value is computed, is set to m2 (>m1). Moreover, during the time period after time t3, the SI value computation interval "l", which is the interval at which the SI value is computed, is set to l2 (>l1).

According to that instruction, during the time period after time t3, the velocity value calculation processing of the computation processing unit 30 is executed in accordance with the velocity computation interval m2. Moreover, according to that instruction, during the time period after time t3, the velocity value calculation processing of the computation processing unit 30 is executed in accordance with the SI value computation interval l2.

Therefore, in the present example, the computation load of the computation processing of the computation processing unit 30 can be adjusted in accordance with the state of ground motion. That is to say, the computation load that is applied is not constant all the time during the occurrence of the ground motion. Instead, accurate computation processing is executed from the onset of the ground motion until a predetermined condition is satisfied (until whether or not the size of the earthquake exceeds a critical level is detected), and if the predetermined condition is satisfied, the computation interval is increased stepwise. In this manner, the computation load is suppressed, and thus a low-power consumption operation can be realized.

Specific Examples

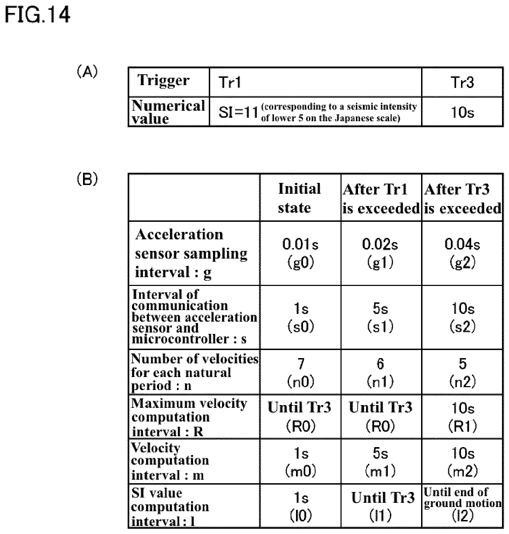

Fig. 14 diagrammatically shows a specific example of tables of adjustment processing of the vibration intensity measuring device according to the present embodiment.

Fig. 14(A) shows a condition table in which predetermined conditions (trigger conditions) are defined.

Specifically, SI=11 is set as the threshold value Tr1 of the SI value.

Moreover, as another predetermined condition, Tr3=10s is set as the threshold value Tr3 of the time period for which the maximum velocity value Sv is not updated.

The above-described judgement condition can be executed using this condition table.

Fig. 14(B) shows an adjustment parameter table for use in the case in which the adjustment processing is performed.

Specifically, adjustment parameters relating to the sampling interval "g", the communication interval "s", the number "n" of velocities for each natural period, the maximum velocity measurement interval R, the velocity computation interval "m", and the SI value computation interval "I" are shown.

As an initial state, the following adjustment parameters are shown: the sampling interval g0 (0.01 s), the communication interval s0 (1 s), the number n0 (7) of velocities for each natural period, the maximum velocity measurement interval R0 (until the condition of Tr3 is satisfied), the velocity computation interval m0 (1 s), and the SI value computation interval 10 (1 s).

Also, the adjustment parameters that are adjusted in the case in which the predetermined condition of the threshold value Tr1 is satisfied are shown as follows: the sampling interval g1 (0.02 s), the communication interval s1 (5 s), the number n1 (6) of velocities for each natural period, the maximum velocity measurement interval R0 (until the condition of Tr3 is satisfied), the velocity computation interval m1 (1 s), and the SI value computation interval I1 (until the condition of Tr3 is satisfied).

Moreover, the adjustment parameters that are adjusted if the predetermined condition of the threshold value Tr3 for which the maximum velocity value Sv is not updated is satisfied are shown as follows: the sampling interval g2 (0.04 s), the communication interval s2 (10 s), the number n2 (5) of velocities for each natural period, the maximum velocity measurement interval R1 (10 s), the velocity computation interval m2 (10 s), and the SI value computation interval I2 (until the end of ground motion).

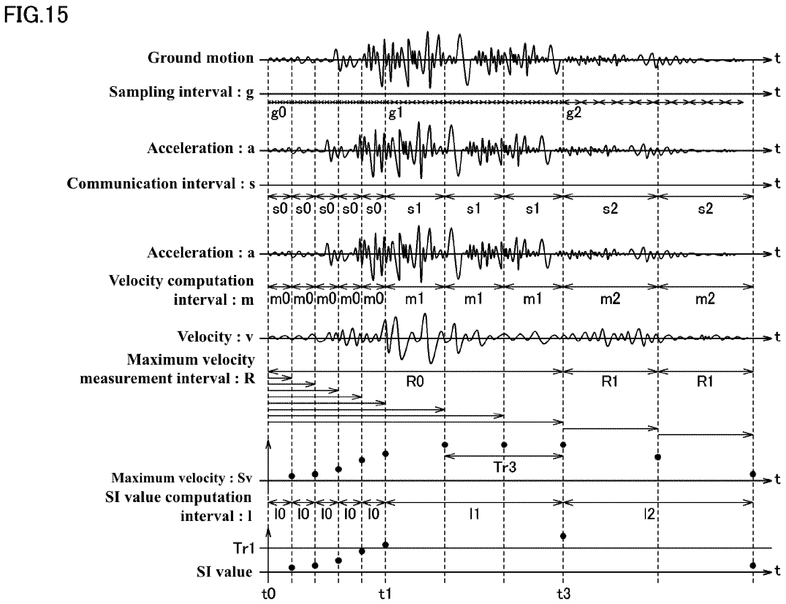

Fig. 15 shows an example of adjustment of the parameters of the sensor unit 10 and the computation processing unit 30 in accordance with the tables in Fig. 14.

Referring to Fig. 15, a case is shown in which, in an initial state of the occurrence of ground motion at time t0, the sampling interval is set to g0 (0.01 s), the communication interval is set to s0 (1 s), the number of velocities for each natural period is set to n0 (7), the maximum velocity measurement interval is set to R0 (until the condition of Tr3 is satisfied), the velocity computation interval is set to m0 (1 s), and the SI value computation interval is set to I0 (1 s), in accordance with the table in Fig. 14(B).

Then, if the threshold value Tr1 is exceeded at time t1, the sampling interval is adjusted to g1 (0.02 s), the communication interval is adjusted to s1 (5 s), the number of velocities for each natural period is adjusted to n1 (6), the maximum velocity measurement interval is adjusted to R0 (until the condition of Tr3 is satisfied), the velocity computation interval is adjusted to m1 (5 s), the SI value computation interval is adjusted to I1 (until the condition of Tr3 is satisfied), in accordance with the table in Fig. 14(B).

Then, if the time period for which the maximum velocity value Sv is not updated exceeds the threshold value Tr3 at time t3, the sampling interval is adjusted to g2 (0.04 s), the communication interval is adjusted to s2 (10 s), the number of velocities for each natural period is adjusted to n2 (5), the maximum velocity measurement interval is adjusted to R1 (10 s), the velocity computation interval is adjusted to m2 (10 s), and the SI value computation interval is adjusted to I2 (until the end of ground motion), in accordance with the table in Fig. 14(B).

Therefore, in the present example, various parameters can be adjusted in accordance with the state of ground motion. That is to say, the computation load and the communication load that are applied are not constant all the time during the occurrence of the ground motion. Instead, accurate measurement and the like are executed from the onset of the ground motion until a predetermined condition is satisfied (until whether or not the size of the earthquake exceeds a critical level is detected), and then if the predetermined condition is satisfied, the computation load and the communication load are suppressed stepwise, so that a low-power consumption operation can be realized.

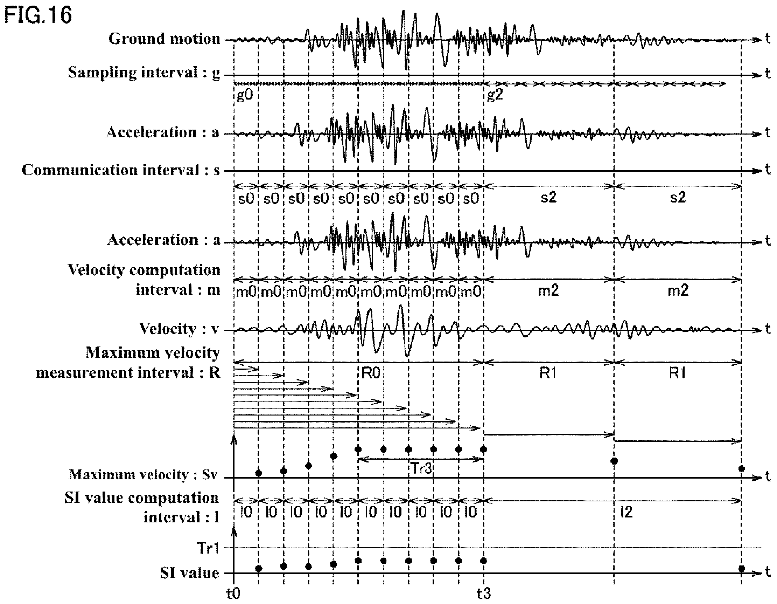

Fig. 16 is another diagram of adjustment of parameters of the sensor unit 10 and the computation processing unit 30 in accordance with the tables in Fig. 14.

Referring to Fig. 16, here, the case of ground vibration that does not exceed the threshold value tr1 is shown.

A case is shown in which, in an initial state of the occurrence of ground motion at time t0, the sampling interval is set to g0 (0.01 s), the communication interval is set to s0 (1 s), the number of velocities for each natural period is set to n0 (7), the maximum velocity measurement interval is set to R0 (until the condition of Tr3 is satisfied), the velocity computation interval is set to m0 (1 s), and the SI value computation interval is set to 10 (1 s), in accordance with the table in Fig. 14(B).

Then, if the time period for which the maximum velocity value Sv is not updated exceeds the threshold value Tr3 at time t3, the sampling interval is adjusted to g2 (0.02 s), the communication interval is adjusted to s2 (10 s), the number of velocities for each natural period is adjusted to n2 (5), the maximum velocity measurement interval is adjusted to R1 (10 s), the velocity computation interval is adjusted to m2 (10 s), and the SI value computation interval is adjusted to 12 (until the end of ground motion), in accordance with the table in Fig. 14(B).

Therefore, in the present example as well, various parameters can be adjusted in accordance with the state of the ground motion. That is to say, the computation load and the communication load that are applied are not constant all the time during the occurrence of the ground motion. Instead, accurate measurement and the like are executed from the onset of the ground motion until a predetermined condition is satisfied (until the case in which ground vibration comes to an end is detected), and then if the predetermined condition is satisfied, the computation load and the communication load are suppressed, so that a low-power consumption operation can be realized.

Modification 1

Although the cases in which parameter adjustment is performed if a predetermined condition is satisfied, that is, for example, if the SI value exceeds the threshold value Tr1, if the time period for which the SI value is not updated exceeds the threshold value Tr2, or if the time period for which the maximum velocity value Sv is not updated exceeds the threshold value Tr3 have been described above by way of example, the present invention is not particularly limited to these cases, and various predetermined conditions can be set for adjustment.

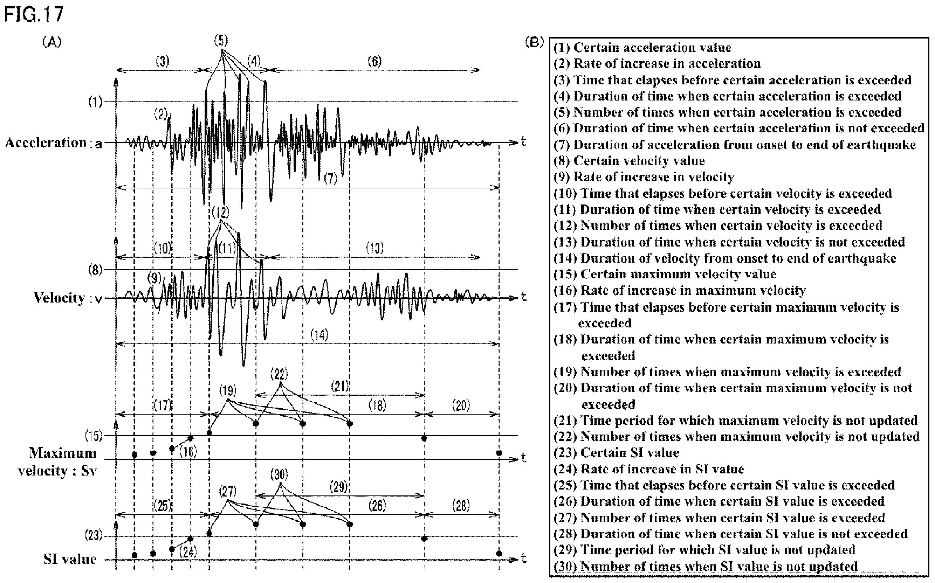

Fig. 17 diagrammatically shows predetermined conditions (trigger conditions).

Referring to Fig. 17, with regard to the acceleration value, for example, it is possible to use (1) a certain acceleration value, (2) the rate of increase in acceleration, (3) the time that elapses before the certain acceleration is exceeded, (4) the duration of time when the certain acceleration is exceeded, (5) the number of times when the certain acceleration is exceeded, (6) the duration of time when the certain acceleration is not exceeded, and (7) the duration of acceleration from the onset to the end of an earthquake.

With regard to the velocity value, it is possible to use (8) a certain velocity value, (9) the rate of increase in velocity, (10) the time that elapses before the certain velocity is exceeded, (11) the duration of time when the certain velocity is exceeded, (12) the number of times when the certain velocity is exceeded, (13) the duration of time when the certain velocity is not exceeded, and (14) the duration of velocity from the onset to the end of an earthquake.

With regard to the maximum velocity value, it is possible to use (15) a certain maximum velocity value, (16) the rate of increase in maximum velocity, (17) the time that elapses before the certain maximum velocity is exceeded, (18) the duration of time when the certain maximum velocity is exceeded, (19) the number of times when the maximum velocity is exceeded, (20) the duration of time when the certain maximum velocity is not exceeded, (21) the time period for which maximum velocity is not updated, and (22) the number of times when maximum velocity is not updated.

With regard to the SI value, it is possible to use (23) a certain SI value, (24) the rate of increase in SI ground, (25) the time that elapses before the certain SI value is exceeded, (26) the duration of time when the certain SI value is exceeded, (27) the number of times when the certain SI value is exceeded, (28) the duration of time when the certain SI value is not exceeded, (29) the time period for which the SI value is not updated, and (30) the number of times when the SI value is not updated.

Note that with respect to the above-described predetermined conditions, the present invention is not limited to the rate of increase, and the rate of change, for example, can also be included in the predetermined conditions. Moreover, the above-described conditions are merely examples, and it goes without saying that another condition can also be set.

Furthermore, with respect to the predetermined conditions, it is also possible to judge whether a plurality of conditions are satisfied, instead of judging whether one condition is satisfied. For example, it is also possible to judge whether or not conditions with respect to both of the acceleration value and the velocity value are satisfied.

Furthermore, it is also possible to combine a plurality of conditions. For example, it may be judged that the required condition is satisfied if a specific condition A is satisfied and thereafter another condition B is satisfied, or it may be judged that the required condition is satisfied if either the condition A or the condition B is satisfied. Alternatively, it may be judged that the required condition is satisfied if the condition B is satisfied within a specific period of time after the condition A is satisfied, or it may be judged that the required condition is satisfied if the condition is not satisfied within that specific period of time. Accurate judgement processing can be executed by combining the above-described conditions as appropriate in accordance with the characteristics of the ground motion.

Modification 2

Next, a case in which the acceleration data acquired from the sensor unit 10 is stored in the memory 34 will be described.

In an initial state of the occurrence of ground motion, for example, it is assumed that the acceleration data is stored in the memory 34 in units of 2 bytes. Acceleration values within a range of -32768 to 328767 (gal) can be stored.

Then, if a predetermined condition is satisfied, for example, if the time period for which the SI value is not updated exceeds the threshold value Tr2, or if the time period for which the maximum velocity value Sv is not updated exceeds the threshold value Tr3, the acceleration values are considered to be small values, and thus switching is performed so that the acceleration data is stored in the memory 34 in units of 1 byte. This method makes it possible to reduce the power consumption even more by changing the amount of data that is stored in the memory 34, in accordance with the state of the ground motion. Moreover, when an acceleration value is stored in the memory, the acceleration value may be stored in the memory in a state in which it is multiplied by a constant to increase the resolution. For example, in the case of an acceleration value of 10.5 (gal), 105 (gal) that is obtained by multiplying the acceleration value with 10, which is a constant, may be stored in the memory. This processing makes it possible to reduce the load during the computation processing while maintaining the accuracy and thereby suppress the power consumption.

Moreover, before calculation of the velocity from the acceleration, the acquired acceleration data can also be corrected by adjusting the offset and the gain. Then, the velocity may be calculated based on the corrected acceleration data.

Moreover, before calculation of the velocity, interpolation may be performed with respect to the acceleration data. As an example of the interpolation, an average value of adjacent two data items can be obtained.

Moreover, before calculation of the velocity, the acceleration may be converted to an integer, and then the calculation may be performed. Also, the calculation may be performed in a state in which the acceleration is multiplied by a constant to increase the resolution. Moreover, the velocity can also be converted to an integer before calculation. The computation load can be reduced by performing the calculation after conversion to an integer.

Moreover, during calculation of the velocity from the acceleration, a time integration method or a simple constant acceleration equation may be used to reduce the computation load.

Moreover, before calculation of the maximum velocity value, the order of priority of the natural period velocities to be selected may be determined. Moreover, it may be judged which natural period is to be selected based on a curve of the maximum velocity value Sv vs. the natural period T at a specific time.

Modification 3

Although the case in which the natural period to be selected is set within a range of the period T = 0.1 to 2.5 has been described above, the present invention is not particularly limited to this range, and natural period velocities can also be calculated in accordance with another range.

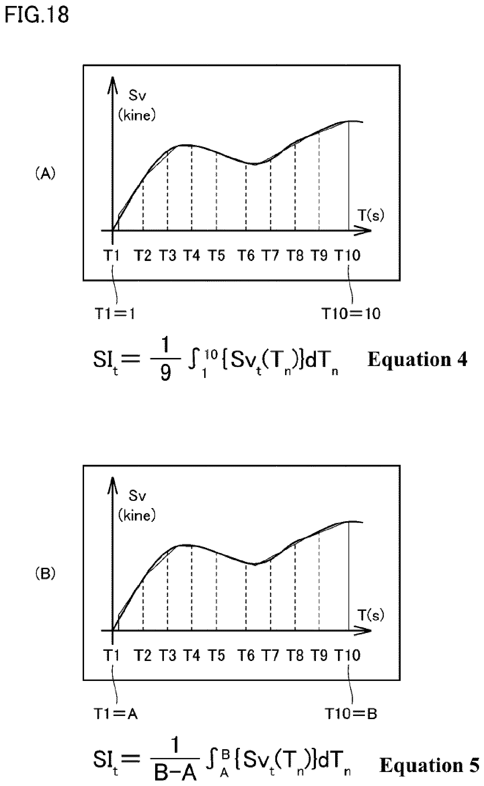

Fig. 18 shows diagrams for explaining setting of another range of natural period.

Referring to Fig. 18(A), here, a case in which natural period velocities are calculated within a range of T = 1 to 10, for example, is shown (Equation 4).

Referring to Fig. 18(B), here, a case in which the above-described equation is converted to a general equation is shown (Equation 5).

It is found that in the case of high-rise buildings, after an earthquake occurs, peaks of shaking appear with a long period. For this reason, there is a possibility that a conventional method for obtaining the SI value cannot accurately measure the earthquake intensity with the range of T = 0.1 to 2.5. To address this issue, accurate earthquake intensity measurement that is suited for a high-rise building may be performed by shifting the natural period velocities to be calculated toward a long-period side.

Modification 4

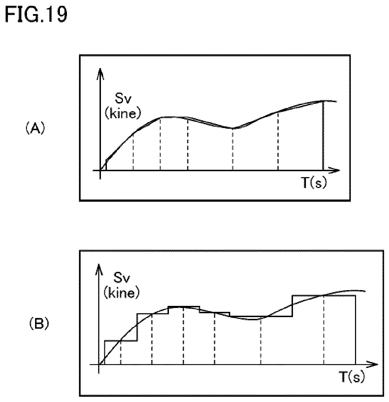

Fig. 19 shows diagrams for explaining a method for calculating an SI value based on a curve of the maximum velocity value Sv vs. the natural period T.

As shown in Fig. 19(A), the computation load can be reduced by computing the SI value according to the trapezoidal rule.

As shown in Fig. 19(B), the computation load can also be reduced by computing the SI value according to rectangle approximation.

Note that it goes without saying that the calculation processing can also be executed after the maximum velocity values Sv are corrected.

Modification 5

A configuration may also be adopted in which the inclination at the time of installation of the shaking intensity measuring device is measured, and the measured value is stored in the memory of the sensor unit. The detected acceleration data can also be corrected using the measured angle of inclination to obtain accurate acceleration data.

Moreover, in the case in which the sensor unit is inclined due to a ground change or the like that is caused by an earthquake, the inclination may also be measured to correct for deviation (shifting) of the offset.

With respect to the timing at which the correction for the offset is performed, the correction may be performed at the end when an earthquake has occurred and come to an end or it may be executed before the computation processing unit goes into a sleep state.

Moreover, when the shaking intensity measuring device falls, whether or not the falling occurs or the number of times of falling may also be stored in the memory.

Moreover, accurate measurement may also be executed by eliminating noise from the acceleration data by adopting a configuration in which shaking other than earthquakes is judged to be a shock.

Modification 6

Next, a method for vector addition of the acceleration data or the like will be described.

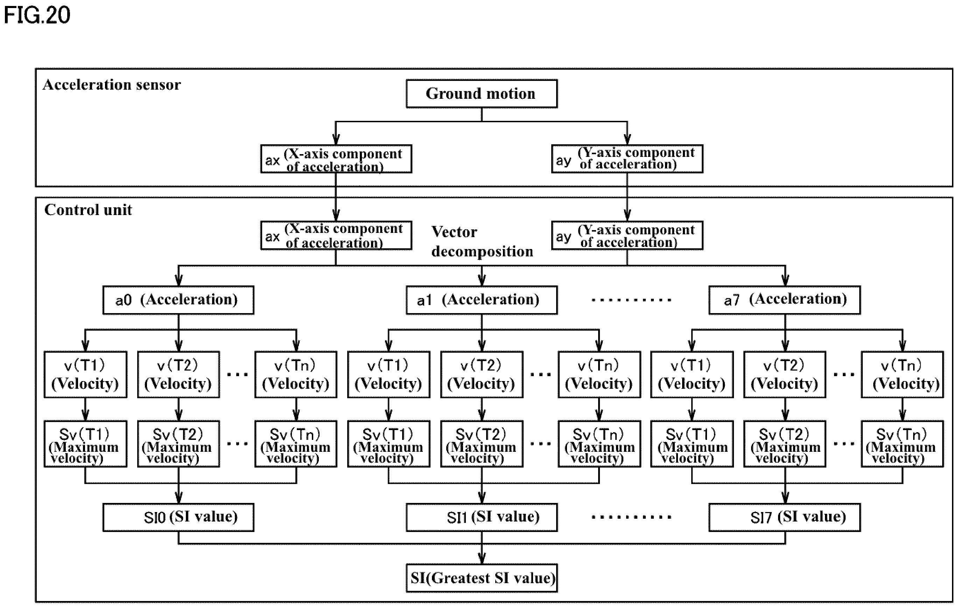

Fig. 20 is a diagram for explaining, as a comparative example, the concept of conventional computation processing for calculating an SI value based on multi-axial acceleration data.

Referring to Fig. 20, here, a case is shown in which during the occurrence of ground motion, the acceleration sensor detects an X-axis component of acceleration ax and a Y-axis component of acceleration ay.

Then, in the control unit, this acceleration data is acquired, and computation of an SI value is executed.

Specifically, vector decomposition is performed based on the X-axis component of acceleration ax and the Y-axis component of acceleration ay to calculate acceleration data with respect to predetermined directions.

In the present example, a case is shown in which acceleration data with respect to eight predetermined directions is calculated.

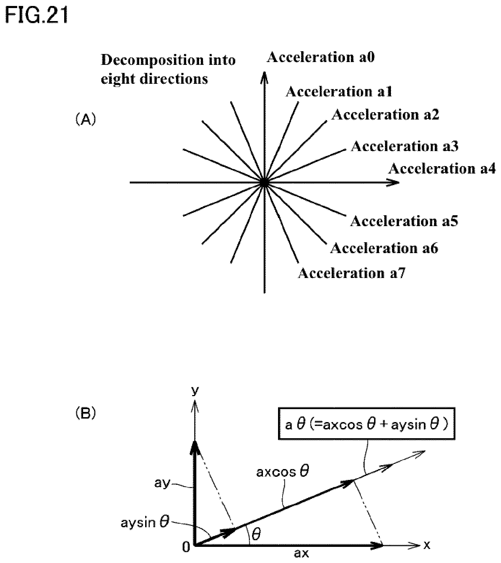

Fig. 21 shows diagrams for explaining an example of vector decomposition.

Referring to Fig. 21(A), here, the directions of accelerations a0 to a7 in eight directions are shown by way of example.

The angles $\theta$ of the accelerations a0 to a7 are 90°, 67.5°, 45°, 22.5°, 0°, 157.5°, 135°, and 112.5°, respectively.

Fig. 21(B) shows a case in which vector decomposition to the angle $\theta$ of any given direction is performed based on the X-axis component of acceleration ax and the Y-axis component of acceleration ay.

Specifically, an acceleration $a\theta$ can be expressed as $ax\cos\theta + ay\sin\theta$.

Referring again to Fig. 20, a case is shown in which, with respect to each of the eight directions of the accelerations a0 to a7 after the above-described vector decomposition, velocity values v(T1) to v(Tn) associated with a natural period T are individually calculated based on the acceleration data, maximum velocity values Sv(T1) to Sv(Tn) are individually calculated based on the calculated velocity values v(T1) to v(Tn), and an SI value is calculated based on the maximum velocity values Sv(T1) to Sv(Tn).

Then, finally, the greatest SI value is calculated from the SI values with respect to the respective directions (eight directions).

This processing enables accurate SI value calculation by calculating SI values with respect to any given directions (eight directions, in the present example). Note that in the present example, a case in which SI values with respect to eight directions are calculated is described by way of example; however, a further improvement in accuracy can be achieved by calculating SI values with respect to a still greater number of directions.

In Modification 6, a method for reducing the computation load while maintaining the accuracy will be described.

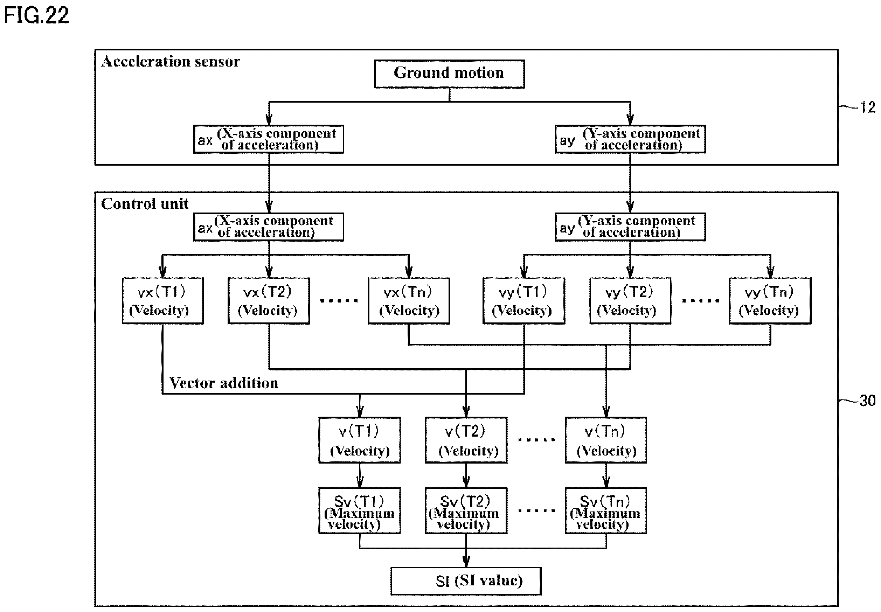

Fig. 22 is a diagram for explaining the concept of computation processing for calculating an SI value based on multi-axial acceleration data according to Modification 6.

Referring to Fig. 22, here, a case is shown in which during the occurrence of ground motion, the acceleration sensor detects an X-axis component of acceleration ax and a Y-axis component of acceleration ay.

Then, in the control unit, this acceleration data is acquired, and computation of an SI value is executed.

Specifically, velocity values v(T1) to v(Tn) associated with a natural period T are calculated based on each of the X-axis component of acceleration ax and the Y-axis component of acceleration ay.

Then, vector addition of the calculated X-axis component velocity values and Y-axis component velocity values is performed.

Then, a case is shown in which maximum velocity values Sv(T1) to Sv(Tn) are individually calculated based on velocity values v(T1) to v(Tn) that are obtained by the vector addition, and an SI value is calculated based on the maximum velocity values Sv(T1) to Sv(Tn).

With this processing, calculation of the magnitude of velocity values with respect to all the directions can be performed by vector addition of X-axis component velocity values and Y-axis component velocity values. Then, an SI value can be calculated based on the velocity values that are obtained by the vector addition. Since all the directions are covered, it is possible to easily reduce the computation load of the comparative example while maintaining the accuracy.

Next, a method for further simplifying the computation load will be described.

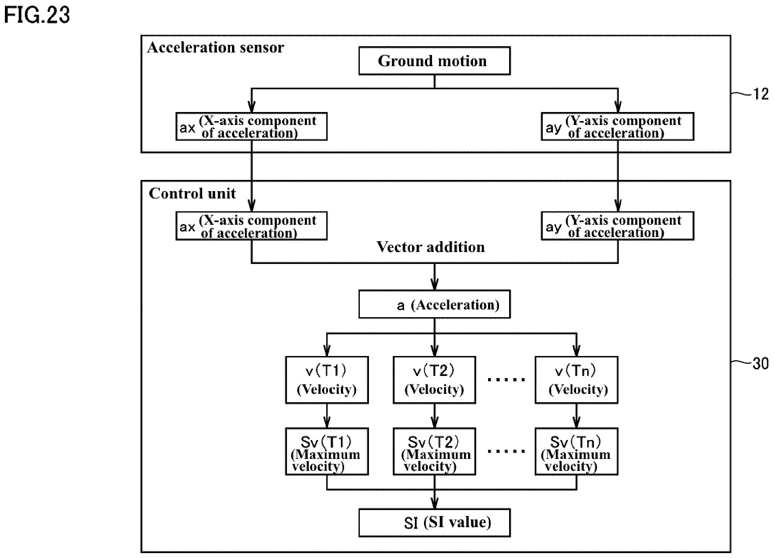

Fig. 23 is a diagram for explaining the concept of computation processing for calculating an SI value based on multi-axial acceleration data according to another example of Modification 6.

Referring to Fig. 23, here, a case is shown in which during the occurrence of ground motion, the acceleration sensor detects an X-axis component of acceleration ax and a Y-axis component of acceleration ay.

Then, in the control unit, this acceleration data is acquired, and computation of an SI value is executed.

Specifically, the X-axis component of acceleration ax and the Y-axis component of acceleration ay are acquired.

Then, vector addition of the acquired X-axis component of acceleration ax and Y-axis component of acceleration ay is performed.

Based on the acceleration data that is obtained by the vector addition, velocity values v(T1) to v(Tn) associated with a natural period T are calculated.

Then, a case is shown in which maximum velocity values Sv(T1) to Sv(Tn) are individually calculated based on the calculated velocity values v(T1) to v(Tn), and an SI value is calculated based on the maximum velocity values Sv(T1) to Sv(Tn).

With this processing, calculation of the magnitude of acceleration with respect to all the directions can be performed by vector addition of an X-axis component of acceleration and a Y-axis component of acceleration. Then, an SI value can be calculated based on the acceleration that is obtained by the vector addition. The computation load can be reduced even more when compared with the case of Fig. 22.

Also, this vector addition method can be adjusted in accordance with the state of ground motion. That is to say, the computation load that is applied is not constant all the time during the occurrence of ground motion. Instead, accurate measurement and the like are executed from the onset of the ground motion until a predetermined condition is satisfied (until the case in which ground vibration comes to an end is detected), and then if the predetermined condition is satisfied, the computation load is suppressed, so that a low-power consumption operation can be realized.

For example, if the predetermined condition is satisfied, switching to the method for calculating an SI value by vector addition of velocity values, the method being described with reference to Fig. 22, may be made. Alternatively, switching to the method for calculating an SI value by vector addition of acceleration, the method being described with reference to Fig. 23, can be made.

Note that in the present example, a biaxial configuration with the X-axis and the Y-axis has been described as an example of the multi-axial configuration; however, the present invention is not limited to a biaxial configuration and is equally applicable to a triaxial configuration including the Z-axis.

Note that the above-described method in which vector addition of velocity values or acceleration is performed is not necessarily required to be executed only if a predetermined condition is satisfied, and during the occurrence of ground motion, an SI value may be calculated according to this method from the beginning.

The embodiment disclosed herein should be considered as illustrative, and the present invention is not limited only to the foregoing description. The scope of the present invention is indicated by the appended claims.

INDEX TO THE REFERENCE NUMERALS

1 ... vibration intensity measuring device, 2 ... secondary battery, 4 ... power supply unit, 10 ... sensor unit, 12 ... acceleration sensor, 14 ... sensor I/F, 16, 34 ... memory, 18 ... sensor control unit, 20, 50 ... communication I/F, 30 ... computation processing unit, 40 ... control unit, 42 ... SI value calculation unit, 44 ... maximum velocity calculation unit, 46 ... velocity calculation unit.

**Claims**

1. A method for controlling a vibration intensity measuring device (1) comprising an acceleration detection unit (10), the method comprising:

    acquiring acceleration data (a) generated by the acceleration detection unit (10); and
    measuring vibration intensity (SI) based on the acquired acceleration data (a),
    at least one of the acquiring step and the measuring step comprising:

judging whether or not a vibration characteristic (SI, Sv) during a period of time from the onset to the end of vibration satisfies a predetermined condition (Tr1, Tr2, Tr3), wherein the predetermined condition is satisfied if a value which corresponds to the vibration characteristic or which is obtained on the basis of the vibration characteristic exceeds a predetermined threshold value; and

adjusting the calculation processing of the measuring step, if it is judged that the predetermined condition (Tr1, Tr2, Tr3) is satisfied,

the method further comprising setting a period of time as a natural period (T), the time during which the acceleration data is acquired comprising a plurality of natural periods,

wherein the vibration intensity measuring step comprises:

calculating velocity values (v) in each natural period (T) based on the acquired acceleration data (a); and calculating a maximum velocity value (Sv) based on the calculated velocity values (v) in each natural period (T), **characterized in that**

in the adjusting step, if it is judged that the predetermined condition (Tr1, Tr2, Tr3) is satisfied, the number of velocity values (v) in said each natural period (T) that are used in calculation of the maximum velocity value (Sv) is decreased.

2. A method for controlling a vibration intensity measuring device (1) comprising an acceleration detection unit (10), the method comprising:

acquiring acceleration data (a) generated by the acceleration detection unit (10); and measuring vibration intensity (SI) based on the acquired acceleration data (a), wherein the vibration intensity measuring step comprises:

calculating velocity values (v) based on the acquired acceleration data (a); calculating maximum velocity values (Sv) based on the calculated velocity values (v);

and

calculating an index indicating the vibration intensity (SI) based on the maximum velocity values (v), at least one of the acquiring step and the measuring step comprising:

judging whether or not a vibration characteristic (SI, Sv) during a period of time from the onset to the end of vibration satisfies a predetermined condition (Tr1, Tr2, Tr3), wherein the predetermined condition is satisfied if a value which corresponds to the vibration characteristic or which is obtained on the basis of the vibration characteristic exceeds a predetermined threshold value; and

adjusting the calculation processing of the measuring step, if it is judged that the predetermined condition (Tr1, Tr2, Tr3) is satisfied, **characterized in that**

in the adjusting step, if it is judged that the predetermined condition (Tr1, Tr2, Tr3) is satisfied, a computation interval (m0, m1, m2), which is the time interval of the calculation of at least one of the velocity values (v) and the index indicating the vibration intensity (SI) is increased.

3. A method for controlling a vibration intensity measuring device (1) comprising an acceleration detection unit (10), the method comprising:

acquiring acceleration data (a) generated by the acceleration detection unit (10); and measuring vibration intensity (SI) based on the acquired acceleration data (a), wherein the vibration intensity measuring step comprises:

calculating velocity values (v) based on the acquired acceleration data (a); calculating maximum velocity values (Sv) based on the calculated velocity values (v);

and

calculating an index indicating the vibration intensity (SI) based on the maximum velocity values (Sv), at least one of the acquiring step and the measuring step comprising:

judging whether or not a vibration characteristic (SI, Sv) during a period of time from the onset to the end of vibration satisfies a predetermined condition (Tr1, Tr2, Tr3), wherein the predetermined condition is satisfied if a value which corresponds to the vibration characteristic or which is obtained on the basis of the vibration characteristic exceeds a predetermined threshold value; and

adjusting the calculation processing of the measuring step, if it is judged that the predetermined condition (Tr1, Tr2, Tr3) is satisfied, **characterized in that** in the adjusting step, if it is judged that the predetermined condition (Tr1, Tr2, Tr3) is satisfied, a maximum velocity measurement interval (R0, R1, R2) that is a timing at which the maximum velocity value (Sv) is reset is changed.

4. The method for controlling the vibration intensity measuring device (1) according to one of claims 1 to 3, wherein the acceleration detection unit (10) generates the acceleration data (a) in accordance with a variable sampling interval (g0, g1, g2), and
in the adjusting step, if it is judged that the predetermined condition (Tr1, Tr2, Tr3) is satisfied, the sampling interval (g0, g1, g2) is increased.

5. The method for controlling the vibration intensity measuring device (1) according to one of claims 1 to 3, wherein the acceleration detection unit (10) sequentially stores the acceleration data in a memory (16),
in the acquiring step, the acceleration data (a) stored in the memory (16) is collectively acquired in accordance with a variable communication interval (s0, s1, s2), and
in the adjusting step, if it is judged that the predetermined condition (Tr1, Tr2, Tr3) is satisfied, the communication interval (s0, s1, s2) is increased.

6. The method for controlling the vibration intensity measuring device (1) according to one of claims 2 or 3, wherein the acceleration detection unit (10) generates acceleration data (a) with respect to each of a plurality of axes (X, Y), and
in the adjusting step, if it is judged that the predetermined condition (Tr1, Tr2, Tr3) is satisfied, with regard to the acquired acceleration data (a), the acceleration data (a) with respect to the plurality of axes (X, Y) is synthesized.

7. The method for controlling the vibration intensity measuring device (1) according to one of claims 2 or 3, wherein the acceleration detection unit (10) generates acceleration data with respect to each of a plurality of axes (X, Y), and
in the adjusting step, if it is judged that the predetermined condition (Tr1, Tr2, Tr3) is satisfied, velocity values (v) that are based on the acceleration data (a) with respect to each of the plurality of axes (X, Y) are synthesized in the velocity value calculating step.

8. A vibration intensity measuring device (1) having an acceleration detection unit (10), the vibration intensity measuring device (1) comprising:

a controller (30) connected to the acceleration detection unit (10),
the controller (30) being configured to perform the steps of:

acquiring acceleration data (a) generated by the acceleration detection unit (10),
measuring vibration intensity (SI) based on the acquired acceleration data (a),
judging, in at least one of acquisition processing for acquiring the acceleration data and calculation processing for measuring the vibration intensity, whether or not a vibration characteristic (SI, Sv) during a period of time from the onset to the end of vibration satisfies a predetermined condition (Tr1, Tr2, Tr3), wherein the predetermined condition is satisfied if a value which corresponds to the vibration characteristic or which is obtained on the basis of the vibration characteristic exceeds a predetermined threshold value,
adjusting the calculation processing for measuring the vibration intensity (SI), if it is judged that the predetermined condition (Tr1, Tr2, Tr3) is satisfied
setting a period of time as a natural period (T), the time during which the acceleration data is acquired comprising a plurality of natural periods,

wherein measuring the vibration intensity comprises calculating velocity values (v) in each natural period (T) based on the acquired acceleration data (a); and
calculating a maximum velocity value (Sv) based on the calculated velocity values (v) in each natural period (T), **characterized in that**
in adjusting the calculation processing for measuring the vibration intensity (SI), if it is judged that the predetermined condition (Tr1, Tr2, Tr3) is satisfied, the controller (30) is further configured to decrease the number of velocity values (v) in said each natural period (T) that are used in calculation of the maximum velocity value (Sv).

9.  A vibration intensity measuring device (1) having an acceleration detection unit (10), the vibration intensity measuring device (1) comprising:

a controller (30) connected to the acceleration detection unit (10),
the controller (30) being configured to perform the steps of:

acquiring acceleration data (a) generated by the acceleration detection unit (10),
measuring vibration intensity (SI) based on the acquired acceleration data (a), wherein measuring the vibration intensity (SI) comprises calculating velocity values (v) based on the acquired acceleration data (a);
calculating maximum velocity values (Sv) based on the calculated velocity values (v);

and

calculating an index indicating the vibration intensity (SI) based on the maximum velocity values (Sv),
judging, in at least one of acquisition processing for acquiring the acceleration data (a) and calculation processing for measuring the vibration intensity (SI), whether or not a vibration characteristic (SI, Sv) during a period of time from the onset to the end of vibration satisfies a predetermined condition (Tr1, Tr2, Tr3), wherein the predetermined condition is satisfied if a value which corresponds to the vibration characteristic or which is obtained on the basis of the vibration characteristic exceeds a predetermined threshold value, and adjusting the calculation processing for measuring the vibration intensity (SI), if it is judged that the predetermined condition (Tr1, Tr2, Tr3) is satisfied,
**characterized in that**
in adjusting the calculation processing for measuring the vibration intensity (SI), if it is judged that the predetermined condition (Tr1, Tr2, Tr3) is satisfied, the controller (30) is further configured to increase a computation interval (m0, m1, m2), which is the time interval of the calculation of at least one of the velocity values (v) and the index indicating the vibration intensity (SI).

10.  A vibration intensity measuring device (1) having an acceleration detection unit (10), the vibration intensity measuring device (1) comprising:

a controller (30) connected to the acceleration detection unit (10),
the controller (30) being configured to perform the steps of:

acquiring acceleration data (a) generated by the acceleration detection unit (10),
measuring vibration intensity (SI) based on the acquired acceleration data (a), wherein measuring the vibration intensity (SI) comprises calculating velocity values (v) based on the acquired acceleration data (a);
calculating maximum velocity values (Sv) based on the calculated velocity values (v);

and

calculating an index indicating the vibration intensity (SI) based on the maximum velocity values (Sv),
judging, in at least one of acquisition processing for acquiring the acceleration data (a) and calculation processing for measuring the vibration intensity (SI), whether or not a vibration characteristic (SI, Sv) during a period of time from the onset to the end of vibration satisfies a predetermined condition (Tr1, Tr2, Tr3), wherein the predetermined condition is satisfied if a value which corresponds to the vibration characteristic or which is obtained on the basis of the vibration characteristic exceeds a predetermined threshold value, and adjusting the calculation processing for measuring the vibration intensity (SI), if it is judged that the predetermined condition (Tr1, Tr2, Tr3) is satisfied,
**characterized in that**
in adjusting the calculation processing for measuring the vibration intensity (SI), if it is judged that the predetermined condition (Tr1, Tr2, Tr3) is satisfied, the controller (30) is further configured to change a maximum velocity measurement interval (R0, R1, R2) that is a timing at which the maximum velocity value (Sv) is reset.

**Patentansprüche**

1. Verfahren zur Steuerung einer Schwingungsintensitätsmessvorrichtung (1), die eine Beschleunigungserkennungseinheit (10) aufweist, wobei das Verfahren umfasst:

   Erfassen von Beschleunigungsdaten (a), die durch die Beschleunigungserkennungseinheit (10) erzeugt wurden; und
   Messen der Schwingungsintensität (SI) basierend auf den erfassten Beschleunigungsdaten (a), wobei mindestens entweder der Erfassungsschritt und/oder der Messschritt umfasst:

   Beurteilen, ob eine Schwingungseigenschaft (SI, Sv) während eines Zeitraums vom Beginn bis zum Ende der Schwingung eine vorher festgelegte Bedingung (Tr1, Tr2, Tr3) erfüllt, oder nicht, wobei die vorher festgelegte Bedingung erfüllt ist, wenn ein Wert, welcher der Schwingungseigenschaft entspricht, oder welcher auf der Grundlage der Schwingungseigenschaft erlangt worden ist, einen vorher festgelegten Grenzwert überschreitet; und
   Anpassen der rechnerischen Verarbeitung des Messschrittes, falls beurteilt wird, dass die vorher festgelegte Bedingung (Tr1, Tr2, Tr3) erfüllt worden ist,

   wobei das Verfahren ferner ein Einstellen eines Zeitraums als einen natürlichen Zeitraum (T) umfasst, wobei die Zeit, während der die Beschleunigungsdaten erfasst werden, eine Mehrzahl natürlicher Zeiträume umfasst, wobei der Schritt des Messens der Schwingungsintensität umfasst:

   Berechnen von Geschwindigkeitswerten (v) in jedem der natürlichen Zeiträume (T) basierend auf den erfassten Beschleunigungsdaten (a); und
   Berechnen eines Maximalgeschwindigkeitswertes (Sv) basierend auf den berechneten Geschwindigkeitswerten (v) in jedem natürlichen Zeitraum (T), **dadurch gekennzeichnet, dass**
   beim Anpassungsschritt, falls beurteilt wird, dass die vorher festgelegte Bedingung (Tr1, Tr2, Tr3) erfüllt worden ist, die Anzahl von Geschwindigkeitswerten (v) in jedem der natürlichen Zeiträume (T), die in der Berechnung des Maximalgeschwindigkeitswertes (Sv) verwendet werden, verringert wird.

2. Verfahren zur Steuerung einer Schwingungsintensitätsmessvorrichtung (1), die eine Beschleunigungserkennungseinheit (10) aufweist, wobei das Verfahren umfasst:

   Erfassen von Beschleunigungsdaten (a), die durch die Beschleunigungserkennungseinheit (10) erzeugt wurden; und
   Messen der Schwingungsintensität (SI) basierend auf den erfassten Beschleunigungsdaten (a), wobei der Schritt des Messens der Schwingungsintensität umfasst:

   Berechnen von Geschwindigkeitswerten (v) basierend auf den erfassten Beschleunigungsdaten (a); Berechnen von Maximalgeschwindigkeitswerten (Sv) basierend auf den berechneten Geschwindigkeitswerten (v) ;
   und
   Berechnen eines Indexes, der die Schwingungsintensität (SI) basierend auf den Maximalgeschwindigkeitswerten (Sv) angibt,

   wobei mindestens entweder der Erfassungsschritt und/oder der Messschritt umfasst:

   Beurteilen, ob eine Schwingungseigenschaft (SI, Sv) während eines Zeitraums vom Beginn bis zum Ende der Schwingung eine vorher festgelegte Bedingung (Tr1, Tr2, Tr3) erfüllt, oder nicht, wobei die vorher festgelegte Bedingung erfüllt ist, wenn ein Wert, welcher der Schwingungseigenschaft entspricht, oder welcher auf der Grundlage der Schwingungseigenschaft erlangt worden ist, einen vorher festgelegten Grenzwert überschreitet; und
   Anpassen der rechnerischen Verarbeitung des Messschritts, falls beurteilt wird, dass die vorher festgelegte Bedingung (Tr1, Tr2, Tr3) erfüllt worden ist, **dadurch gekennzeichnet, dass**

   beim Anpassungsschritt, falls beurteilt wird, dass die vorher festgelegte Bedingung (Tr1, Tr2, Tr3) erfüllt worden ist, ein Berechnungsintervall (m0, m1, m2),

welches das Zeitintervall der Berechnung mindestens entweder der Geschwindigkeitswerte (v) und/oder des Indexes, der die Schwingungsintensität (SI) angibt, erhöht wird.

3. Verfahren zur Steuerung einer Schwingungsintensitätsmessvorrichtung (1), die eine Beschleunigungserkennungseinheit (10) aufweist, wobei das Verfahren umfasst:

Erfassen von Beschleunigungsdaten (a), die durch die Beschleunigungserkennungseinheit (10) erzeugt wurden; und
Messen der Schwingungsintensität (SI) basierend auf den erfassten Beschleunigungsdaten (a), wobei der Schritt des Messens der Schwingungsintensität umfasst:

Berechnen von Geschwindigkeitswerten (v) basierend auf den erfassten Beschleunigungsdaten (a); Berechnen von Maximalgeschwindigkeitswerten (Sv) basierend auf den berechneten Geschwindigkeitswerten (v) ;
und
Berechnen eines Indexes, der die Schwingungsintensität (SI) basierend auf den Maximalgeschwindigkeitswerten (Sv) angibt,

wobei mindestens entweder der Erfassungsschritt und/oder der Messschritt umfasst:

Beurteilen, ob eine Schwingungseigenschaft (SI, Sv) während eines Zeitraums vom Beginn bis zum Ende der Schwingung eine vorher festgelegte Bedingung (Tr1, Tr2, Tr3) erfüllt, oder nicht, wobei die vorher festgelegte Bedingung erfüllt ist, wenn ein Wert,
welcher der Schwingungseigenschaft entspricht, oder welcher auf der Grundlage der Schwingungseigenschaft erlangt worden ist, einen vorher festgelegten Grenzwert überschreitet; und
Anpassen der rechnerischen Verarbeitung des Messschritts, falls beurteilt wird, dass die vorher festgelegte Bedingung (Tr1, Tr2, Tr3) erfüllt worden ist, **dadurch gekennzeichnet, dass**
beim Anpassungsschritt, falls beurteilt wird, dass die vorher festgelegte Bedingung (Tr1, Tr2, Tr3) erfüllt worden ist, ein Maximalgeschwindigkeitsmessintervall (R0, R1, R2), welches ein Zeitpunkt ist, an dem der Maximalgeschwindigkeitswert (Sv) zurückgesetzt wird, geändert wird.

4. Verfahren zur Steuerung der Schwingungsintensitätsmessvorrichtung (1) nach einem der Ansprüche 1 bis 3, wobei die Beschleunigungserkennungseinheit (10) die Beschleunigungsdaten (a) im Einklang mit einem veränderlichen Abtastintervall (g0, g1, g2) erzeugt, und
beim Anpassungsschritt, falls beurteilt wird, dass die vorher festgelegte Bedingung (Tr1, Tr2, Tr3) erfüllt worden ist, das Abtastintervall (g0, g1, g2) erhöht wird.

5. Verfahren zur Steuerung der Schwingungsintensitätsmessvorrichtung (1) nach einem der Ansprüche 1 bis 3, wobei die Beschleunigungserkennungseinheit (10) die Beschleunigungsdaten hintereinander in einem Speicher (16) speichert,
beim Erfassungsschritt die im Speicher (16) gespeicherten Beschleunigungsdaten (a) gemeinsam erfasst werden im Einklang mit einem veränderlichen Kommunikationsintervall (s0, s1, s2), und
beim Anpassungsschritt, falls beurteilt wird, dass die vorher festgelegte Bedingung (Tr1, Tr2, Tr3) erfüllt worden ist, das Kommunikationsintervall (s0, s1, s2) erhöht wird.

6. Verfahren zur Steuerung der Schwingungsintensitätsmessvorrichtung (1) nach einem der Ansprüche 2 oder 3, wobei die Beschleunigungserkennungseinheit (10) Beschleunigungsdaten (a) in Bezug auf jede einer Mehrzahl von Achsen (X, Y) erzeugt, und
beim Anpassungsschritt, falls beurteilt wird, dass die vorher festgelegte Bedingung (Tr1, Tr2, Tr3) in Bezug auf die erfassten Beschleunigungsdaten (a) erfüllt worden ist, die Beschleunigungsdaten (a) in Bezug auf die Mehrzahl von Achsen (X, Y) synthetisiert werden.

7. Verfahren zur Steuerung der Schwingungsintensitätsmessvorrichtung (1) nach einem der Ansprüche 2 oder 3, wobei die Beschleunigungserkennungseinheit (10) Beschleunigungsdaten in Bezug auf jede einer Mehrzahl von Achsen (X, Y) erzeugt, und
beim Anpassungsschritt, falls beurteilt wird, dass die vorher festgelegte Bedingung (Tr1, Tr2, Tr3) erfüllt worden ist, Geschwindigkeitswerte (v), die auf den Beschleunigungsdaten (a) in Bezug auf jede der Mehrzahl von Achsen (X, Y) basieren, beim Geschwindigkeitswertberechnungsschritt synthetisiert werden.

8. Schwingungsintensitätsmessvorrichtung (1), die eine Beschleunigungserkennungseinheit (10) aufweist, wobei die Schwingungsintensitätsmessvorrichtung (1) umfasst:

   eine Steuerung (30), die mit der Beschleunigungserkennungseinheit (10) verbunden ist,
   wobei die Steuerung (30) dazu eingerichtet ist, die Schritte auszuführen:

   Erfassen von Beschleunigungsdaten (a), die durch die Beschleunigungserkennungseinheit (10) erzeugt wurden, Messen der Schwingungsintensität (SI) basierend auf den erfassten Beschleunigungsdaten (a), Beurteilen, mindestens entweder bei der Erfassungsverarbeitung zum Erfassen der Beschleunigungsdaten und/oder bei der rechnerischen Verarbeitung zum Messen der Schwingungsintensität, ob eine Schwingungseigenschaft (SI, Sv) während eines Zeitraums vom Beginn bis zum Ende der Schwingung eine vorher festgelegte Bedingung (Tr1, Tr2, Tr3) erfüllt, oder nicht, wobei die vorher festgelegte Bedingung erfüllt ist, wenn ein Wert, welcher der Schwingungseigenschaft entspricht, oder welcher auf der Grundlage der Schwingungseigenschaft erlangt worden ist, einen vorher festgelegten Grenzwert überschreitet,
   Anpassen der rechnerischen Verarbeitung zum Messen der Schwingungsintensität (SI), falls beurteilt wird, dass die vorher festgelegte Bedingung (Tr1, Tr2, Tr3) erfüllt worden ist,
   Einstellen eines Zeitraums als einen natürlichen Zeitraum (T), wobei die Zeit, während der die Beschleunigungsdaten erfasst werden, eine Mehrzahl natürlicher Zeiträume umfasst,

   wobei das Berechnen der Schwingungsintensität das Berechnen von Geschwindigkeitswerten (v) in jedem der natürlichen Zeiträume (T) basierend auf den erfassten Beschleunigungsdaten (a) umfasst; und
   Berechnen eines Maximalgeschwindigkeitswertes (Sv) basierend auf den berechneten Geschwindigkeitswerten (v) in jedem der natürlichen Zeiträume (T), **dadurch gekennzeichnet, dass**
   beim Anpassen der rechnerischen Verarbeitung zum Messen der Schwingungsintensität (SI), falls beurteilt wird, dass die vorher festgelegte Bedingung (Tr1, Tr2, Tr3) erfüllt worden ist, die Steuerung (30) ferner dazu eingerichtet ist, die Anzahl von Geschwindigkeitswerten (v) in jedem der natürlichen Zeiträume (T), die in der Berechnung des Maximalgeschwindigkeitswertes (Sv) verwendet werden, zu verringern.

9. Schwingungsintensitätsmessvorrichtung (1), die eine Beschleunigungserkennungseinheit (10) aufweist, wobei die Schwingungsintensitätsmessvorrichtung (1) umfasst:

   eine Steuerung (30), die mit der Beschleunigungserkennungseinheit (10) verbunden ist,
   wobei die Steuerung (30) dazu eingerichtet ist, die Schritte auszuführen:

   Erfassen von Beschleunigungsdaten (a), die durch die Beschleunigungserkennungseinheit (10) erzeugt wurden, Messen der Schwingungsintensität (SI) basierend auf den erfassten Beschleunigungsdaten (a), wobei das Messen der Schwingungsintensität (SI) umfasst:
   Berechnen von Geschwindigkeitswerten (v) basierend auf den erfassten Beschleunigungsdaten (a);
   Berechnen von Maximalgeschwindigkeitswerten (Sv) basierend auf den berechneten Geschwindigkeitswerten (v) ;
   und
   Berechnen eines Indexes, der die Schwingungsintensität (SI) basierend auf den Maximalgeschwindigkeitswerten (Sv) angibt, Beurteilen, mindestens entweder bei der Erfassungsverarbeitung zum Erfassen der Beschleunigungsdaten (a) und/oder bei der rechnerischen Verarbeitung zum Messen der Schwingungsintensität (SI), ob eine Schwingungseigenschaft (SI, Sv) während eines Zeitraums vom Beginn bis zum Ende der Schwingung eine vorher festgelegte Bedingung (Tr1, Tr2, Tr3) erfüllt, oder nicht, wobei die vorher festgelegte Bedingung erfüllt ist, wenn ein Wert, welcher der Schwingungseigenschaft entspricht, oder welcher auf der Grundlage der Schwingungseigenschaft erlangt worden ist, einen vorher festgelegten Grenzwert überschreitet, und Anpassen der rechnerischen Verarbeitung zum Messen der Schwingungsintensität (SI), falls beurteilt wird, dass die vorher festgelegte Bedingung (Tr1, Tr2, Tr3) erfüllt worden ist,

   **dadurch gekennzeichnet, dass**
   beim Anpassen der rechnerischen Verarbeitung zum Messen der Schwingungsintensität (SI), falls beurteilt wird, dass die vorher festgelegte Bedingung (Tr1, Tr2, Tr3) erfüllt worden ist, die Steuerung (30) ferner dazu eingerichtet ist, ein Berechnungsintervall (m0, m1, m2), welches das Zeitintervall der Berechnung mindestens entweder der Geschwindigkeitswerte (v) und/oder des Indexes, der die Schwingungsintensität (SI) angibt, zu erhöhen.

**10.** Schwingungsintensitätsmessvorrichtung (1), die eine Beschleunigungserkennungseinheit (10) aufweist, wobei die Schwingungsintensitätsmessvorrichtung (1) umfasst:

eine Steuerung (30), die mit der Beschleunigungserkennungseinheit (10) verbunden ist,
wobei die Steuerung (30) dazu eingerichtet ist, die Schritte auszuführen:
Erfassen von Beschleunigungsdaten (a), die durch die Beschleunigungserkennungseinheit (10) erzeugt wurden,
Messen der Schwingungsintensität (SI) basierend auf den erfassten Beschleunigungsdaten (a), wobei das Messen der Schwingungsintensität (SI) umfasst:

Berechnen von Geschwindigkeitswerten (v) basierend auf den erfassten Beschleunigungsdaten (a);
Berechnen von Maximalgeschwindigkeitswerten (Sv) basierend auf den berechneten Geschwindigkeitswerten (v) ;
und
Berechnen eines Indexes, der die Schwingungsintensität (SI) basierend auf den Maximalgeschwindigkeitswerten (Sv) angibt, Beurteilen, mindestens entweder bei der Erfassungsverarbeitung zum Erfassen der Beschleunigungsdaten (a) und/oder der rechnerischen Verarbeitung zum Messen der Schwingungsintensität (SI), ob eine Schwingungseigenschaft (SI, Sv) während eines Zeitraums vom Beginn bis zum Ende der Schwingung eine vorher festgelegte Bedingung (Tr1, Tr2, Tr3) erfüllt, oder nicht, wobei die vorher festgelegte Bedingung erfüllt ist, wenn ein Wert, welcher der Schwingungseigenschaft entspricht, oder welcher auf der Grundlage der Schwingungseigenschaft erlangt worden ist, einen vorher festgelegten Grenzwert überschreitet, und Anpassen der rechnerischen Verarbeitung zum Messen der Schwingungsintensität (SI), falls beurteilt wird, dass eine vorher festgelegte Bedingung (Tr1, Tr2, Tr3) erfüllt worden ist,

**dadurch gekennzeichnet, dass**
beim Anpassen der rechnerischen Verarbeitung zum Messen der Schwingungsintensität (SI), falls beurteilt wird, dass die vorher festgelegte Bedingung (Tr1, Tr2, Tr3) erfüllt worden ist, die Steuerung (30) ferner dazu eingerichtet ist, ein Maximalgeschwindigkeitsmessintervall (R0, R1, R2), welches ein Zeitpunkt ist, an welchem der Maximalgeschwindigkeitswert (Sv) zurückgesetzt wird, zu ändern.

**Revendications**

**1.** Procédé de commande d'un dispositif de mesure d'intensité de vibration (1) comprenant une unité de détection d'accélération (10), le procédé comprenant :

l'acquisition de données d'accélération (a) générées par l'unité de détection d'accélération (10) ; et
la mesure d'une intensité de vibration (SI) sur la base des données d'accélération (a) acquises,
au moins l'une de l'étape d'acquisition et de l'étape de mesure comprenant :

le fait de juger si une caractéristique de vibration (SI, Sv) durant une période de temps allant du début à la fin de la vibration remplit ou non une condition prédéterminée (Tr1, Tr2, Tr3) ; et
le réglage du processus de calcul de l'étape de mesure, s'il est jugé que la condition prédéterminée (Tr1, Tr2, Tr3) est remplie,

le procédé comprenant en outre le réglage d'une période de temps en tant que période naturelle (T), le temps durant lequel les données d'accélération sont acquises comprenant une pluralité de périodes naturelles,
dans laquelle l'étape de mesure d'intensité de vibration comprend :

le calcul de valeurs de vitesse (v) dans chaque période naturelle (T) sur la base des données d'accélération (a) acquises ; et
le calcul d'une valeur de vitesse maximale (Sv) sur la base des valeurs de vitesse (v) calculées dans chaque période naturelle (T), **caractérisé en ce que**
dans l'étape de réglage, s'il est jugé que la condition prédéterminée (Tr1, Tr2, Tr3) est remplie, le nombre de valeurs de vitesse (v) dans ladite chaque période naturelle (T) qui sont utilisées dans le calcul de la valeur de vitesse maximale (Sv) est diminué.

**2.** Procédé de commande d'un dispositif de mesure d'intensité de vibration (1) comprenant une unité de détection d'accélération (10), le procédé comprenant :

l'acquisition de données d'accélération (a) générées par l'unité de détection d'accélération (10) ; et
la mesure d'une intensité de vibration (SI) sur la base des données d'accélération (a) acquises, dans laquelle l'étape de mesure d'intensité de vibration comprend :

le calcul de valeurs de vitesse (v) sur la base des données d'accélération (a) acquises ;
le calcul de valeurs de vitesse maximales (Sv) sur la base des valeurs de vitesse (v) calculées ; et
le calcul d'un indice indiquant l'intensité de vibration (SI) sur la base des valeurs de vitesse maximales (v),

au moins l'une de l'étape d'acquisition et de l'étape de mesure comprenant :

le fait de juger si une caractéristique de vibration (SI, Sv) durant une période de temps allant du début à la fin de la vibration remplit ou non une condition prédéterminée (Tr1, Tr2, Tr3) ; et
le réglage du processus de calcul de l'étape de mesure, s'il est jugé que la condition prédéterminée (Tr1, Tr2, Tr3) est remplie, **caractérisé en ce que**
dans l'étape de réglage, s'il est jugé que la condition prédéterminée (Tr1, Tr2, Tr3) est remplie, un intervalle de calcul (m0, m1, m2), qui est l'intervalle de temps du calcul d'au moins l'un des valeurs de vitesse (v) et de l'indice indiquant l'intensité de vibration (SI), est augmenté.

3.  Procédé de commande d'un dispositif de mesure d'intensité de vibration (1) comprenant une unité de détection d'accélération (10), le procédé comprenant :

l'acquisition de données d'accélération (a) générées par l'unité de détection d'accélération (10) ; et
la mesure d'une intensité de vibration (SI) sur la base des données d'accélération (a) acquises, dans laquelle l'étape de mesure d'intensité de vibration comprend :
le calcul de valeurs de vitesse (v) sur la base des données d'accélération (a) acquises ;
le calcul de valeurs de vitesse maximales (Sv) sur la base des valeurs de vitesse (v) calculées ; et
le calcul d'un indice indiquant l'intensité de vibration (SI) sur la base des valeurs de vitesse maximales (Sv),
au moins l'une de l'étape d'acquisition et de l'étape de mesure comprenant :

le fait de juger si une caractéristique de vibration (SI, Sv) durant une période de temps allant du début à la fin de la vibration remplit ou non une condition prédéterminée (Tr1, Tr2, Tr3) ; et
le réglage du processus de calcul de l'étape de mesure, s'il est jugé que la condition prédéterminée (Tr1, Tr2, Tr3) est remplie, **caractérisé en ce que**
dans l'étape de réglage, s'il est jugé que la condition prédéterminée (Tr1, Tr2, Tr3) est remplie, un intervalle de mesure de vitesse maximale (R0, R1, R2) qui est un moment auquel la valeur de vitesse maximale (Sv) est réinitialisée, est changé.

4.  Procédé de commande du dispositif de mesure d'intensité de vibration (1) selon l'une des revendications 1 à 3,
dans lequel l'unité de détection d'accélération (10) génère les données d'accélération (a) conformément à un intervalle d'échantillonnage (g0, g1, g2) variable, et
dans l'étape de réglage, s'il est jugé que la condition prédéterminée (Tr1, Tr2, Tr3) est remplie, l'intervalle d'échantillonnage (g0, g1, g2) est augmenté.

5.  Procédé de commande du dispositif de mesure d'intensité de vibration (1) selon l'une des revendications 1 à 3,
dans laquelle l'unité de détection d'accélération (10) stocke de manière séquentielle les données d'accélération dans une mémoire (16),
dans l'étape d'acquisition, les données d'accélération (a) stockées dans la mémoire (16) sont acquises de manière collective conformément à un intervalle de communication (s0, s1, s2) variable, et
dans l'étape de réglage, s'il est jugé que la condition prédéterminée (Tr1, Tr2, Tr3) est remplie, l'intervalle de communication (s0, s1, s2) est augmenté.

6.  Procédé de commande du dispositif de mesure d'intensité de vibration (1) selon l'une des revendications 2 ou 3,
dans laquelle l'unité de détection d'accélération (10) génère des données d'accélération (a) par rapport à chacun d'une pluralité d'axes (X, Y), et
dans l'étape de réglage, s'il est jugé que la condition prédéterminée (Tr1, Tr2, Tr3) est remplie, en ce qui concerne les données d'accélération (a) acquises, les données d'accélération (a) par rapport à la pluralité d'axes (X, Y) sont synthétisées.

7. Procédé de commande du dispositif de mesure d'intensité de vibration (1) selon l'une des revendications 2 ou 3, dans laquelle l'unité de détection d'accélération (10) génère des données d'accélération par rapport à chacun d'une pluralité d'axes (X, Y), et
dans l'étape de réglage, s'il est jugé que la condition prédéterminée (Tr1, Tr2, Tr3) est remplie, des valeurs de vitesse (v) qui sont basées sur les données d'accélération (a) par rapport à chacun de la pluralité d'axes (X, Y) sont synthétisées dans l'étape de calcul de valeur de vitesse.

8. Dispositif de mesure d'intensité de vibration (1) ayant une unité de détection d'accélération (10), le dispositif de mesure d'intensité de vibration (1) comprenant :

un dispositif de commande (30) connecté à l'unité de détection d'accélération (10),
le dispositif de commande (30) étant configuré pour réaliser les étapes consistant à :

acquérir des données d'accélération (a) générées par l'unité de détection d'accélération (10),
mesurer une intensité de vibration (SI) sur la base des données d'accélération (a) acquises,
juger, dans au moins l'un d'un processus d'acquisition pour acquérir les données d'accélération et d'un processus de calcul pour mesurer l'intensité de vibration, si une caractéristique de vibration (SI, Sv) durant une période de temps allant du début à la fin de la vibration remplit ou non une condition prédéterminée (Tr1, Tr2, Tr3),
régler le processus de calcul pour mesurer l'intensité de vibration (SI), s'il est jugé que la condition prédéterminée (Tr1, Tr2, Tr3) est remplie,
régler une période de temps en tant que période naturelle (T), le temps durant lequel les données d'accélération sont acquises comprenant une pluralité de périodes naturelles,

dans lequel la mesure de l'intensité de vibration comprend le calcul de valeurs de vitesse (v) dans chaque période naturelle (T) sur la base des données d'accélération (a) acquises ; et
le calcul d'une valeur de vitesse maximale (Sv) sur la base des valeurs de vitesse (v) calculées dans chaque période naturelle (T),
**caractérisé en ce que**
lors du réglage du processus de calcul pour mesurer l'intensité de vibration (SI), s'il est jugé que la condition prédéterminée (Tr1, Tr2, Tr3) est remplie, le dispositif de commande (30) est en outre configuré pour diminuer le nombre de valeurs de vitesse (v) dans ladite chaque période naturelle (T) qui sont utilisées dans le calcul de la valeur de vitesse maximale (Sv).

9. Dispositif de mesure d'intensité de vibration (1) ayant une unité de détection d'accélération (10), le dispositif de mesure d'intensité de vibration (1) comprenant :

un dispositif de commande (30) connecté à l'unité de détection d'accélération (10),
le dispositif de commande (30) étant configuré pour réaliser les étapes consistant à :

acquérir des données d'accélération (a) générées par l'unité de détection d'accélération (10),
mesurer une intensité de vibration (SI) sur la base des données d'accélération (a) acquises, dans lequel la mesure de l'intensité de vibration (SI) comprend
le calcul de valeurs de vitesse (v) sur la base des données d'accélération (a) acquises ;
le calcul de valeurs de vitesse maximales (Sv) sur la base des valeurs de vitesse (v) calculées ; et
le calcul d'un indice indiquant l'intensité de vibration (SI) sur la base des valeurs de vitesse maximales (Sv),

juger, dans au moins l'un d'un processus d'acquisition pour acquérir les données d'accélération (a) et d'un processus de calcul pour mesurer l'intensité de vibration (SI), si une caractéristique de vibration (SI, Sv) durant une période de temps allant du début à la fin de la vibration remplit ou non une condition prédéterminée (Tr1, Tr2, Tr3), et régler le processus de calcul pour mesurer l'intensité de vibration (SI), s'il est jugé que la condition prédéterminée (Tr1, Tr2, Tr3) est remplie,
**caractérisé en ce que**
lors du réglage du processus de calcul pour mesurer l'intensité de vibration (SI), s'il est jugé que la condition prédéterminée (Tr1, Tr2, Tr3) est remplie, le dispositif de commande (30) est en outre configuré pour augmenter un intervalle de calcul (m0, m1, m2), qui est l'intervalle de temps du calcul d'au moins l'un des valeurs de vitesse (v) et de l'indice indiquant l'intensité de vibration (SI).

10. Dispositif de mesure d'intensité de vibration (1) ayant une unité de détection d'accélération (10), le dispositif de mesure d'intensité de vibration (1) comprenant :

un dispositif de commande (30) connecté à l'unité de détection d'accélération (10),
le dispositif de commande (30) étant configuré pour réaliser les étapes consistant à :

acquérir des données d'accélération (a) générées par l'unité de détection d'accélération (10),
mesurer une intensité de vibration (SI) sur la base des données d'accélération (a) acquises, dans lequel la mesure de l'intensité de vibration (SI) comprend
le calcul de valeurs de vitesse (v) sur la base des données d'accélération (a) acquises ;
le calcul de valeurs de vitesse maximales (Sv) sur la base des valeurs de vitesse (v) calculées ;
et
le calcul d'un indice indiquant l'intensité de vibration (SI) sur la base des valeurs de vitesse maximales (Sv),

juger, dans au moins l'un d'un processus d'acquisition pour acquérir les données d'accélération (a) et d'un processus de calcul pour mesurer l'intensité de vibration (SI), si une caractéristique de vibration (SI, Sv) durant une période de temps allant du début à la fin de la vibration remplit ou non une condition prédéterminée (Tr1, Tr2, Tr3), et régler le processus de calcul pour mesurer l'intensité de vibration (SI), s'il est jugé que la condition prédéterminée (Tr1, Tr2, Tr3) est remplie,
**caractérisé en ce que**
lors du réglage du processus de calcul pour mesurer l'intensité de vibration (SI), s'il est jugé que la condition prédéterminée (Tr1, Tr2, Tr3) est remplie, le dispositif de commande (30) est en outre configuré pour changer un intervalle de mesure de vitesse maximale (R0, R1, R2) qui est un moment auquel la valeur de vitesse maximale (Sv) est réinitialisée.

# FIG.1

EP 2 944 979 B1

FIG.2

**Sensor unit**                    **Computation processing unit**

Start

S2
Standby mode

S4
NO ← Is acceleration threshold value exceeded?
YES

S6
Output activation signal → S12 Accept activation signal

S8
Operating mode

S14
Acquisition processing

S10
NO ← Finish
YES

S16
Computation processing

S18
NO ← Finish
YES

S20
Store in memory

End

FIG.3

```
        ┌──────────────────┐
        │   Acquisition    │
        │   processing     │
        └──────────────────┘
                 │
    ┌────────────▼────────────┐  S30
    │   Has period of time of │
NO  │  communication interval │
◄───┤      "s" elapsed?       │
    └────────────┬────────────┘
                 │ YES
        ┌────────▼─────────┐  S32
        │ Communicate with │
        │ sensor unit and  │
        │ acquire          │
        │ acceleration data│
        └────────┬─────────┘
                 │
        ┌────────▼─────────┐  S34
        │Acceleration      │
        │judgement         │
        │processing        │
        └────────┬─────────┘
                 │
        ┌────────▼─────────┐
        │     Return       │
        └──────────────────┘
```

FIG.4

```
        ┌──────────────────┐
        │   Computation    │
        │   processing     │
        └──────────────────┘
                 │
        ┌────────▼──────────────────┐  S40
        │Velocity calculation       │
        │processing                 │
        └────────┬──────────────────┘
                 │
        ┌────────▼──────────────────┐  S41
        │Velocity judgement         │
        │processing                 │
        └────────┬──────────────────┘
                 │
        ┌────────▼──────────────────┐  S42
        │   Maximum velocity        │
        │   calculation processing  │
        └────────┬──────────────────┘
                 │
        ┌────────▼──────────────────┐  S43
        │   Maximum velocity        │
        │   judgement processing    │
        └────────┬──────────────────┘
                 │
        ┌────────▼──────────────────┐  S44
        │SI value calculation       │
        │processing                 │
        └────────┬──────────────────┘
                 │
        ┌────────▼──────────────────┐  S45
        │SI value judgement         │
        │processing                 │
        └────────┬──────────────────┘
                 │
        ┌────────▼─────────┐
        │     Return       │
        └──────────────────┘
```

FIG.5

```
        ┌─────────────┐
        │  Judgement  │
        │ processing  │
        └──────┬──────┘
               │           S46
        ┌──────▼──────────────┐
  NO  ◄─┤  Is trigger exceeded? │
        └──────┬──────────────┘
               │ YES      S47
        ┌──────▼──────────────┐
        │ Parameter adjustment │
        └──────┬──────────────┘
               │           S48
        ┌──────▼──────────────┐
        │ Output discrimination│
        │ signal               │
        └──────┬──────────────┘
               │
        ┌──────▼──────┐
        │   Return    │
        └─────────────┘
```

FIG.6

(A) SI value

Tr1

Tr2

t

(B) Maximum velocity value Sv

Tr3

t

EP 2 944 979 B1

# FIG.7

(A)

Maximum velocity judgement processing

S60
NO — Is time period Tr3 with respect to maximum velocity Sv exceeded?

YES → S62

Parameter adjustment

Return

(B)

SI value judgement processing

S50
NO — Is Tr1 with respect to SI value exceeded?

YES → S52

Parameter adjustment

S53
Output discrimination signal

S54
NO — Is time period Tr2 with respect to SI value exceeded?

YES → S56

Parameter adjustment

Return

FIG.8

(A) Ground motion

(B) Sampling interval : g

(C) Acceleration

(D) SI value

# FIG.9

(A)  Acceleration: a

(B) Communication
interval: s

s0 | s0 | s0 | s0 | s0 | s1 | s1 | s1 | s2 | s2

(C)

Tr1

SI value

Tr2

t0    t1         t2

FIG.10

EP 2 944 979 B1

FIG.11

FIG.12

EP 2 944 979 B1

FIG.13

(A) Acceleration : a

(B) Velocity computation interval :m

(C) Velocity : v

(D) Maximum velocity :Sv

(E) SI value computation interval :I

(F) SI value

# FIG.14

(A)

| Trigger | Tr1 | | Tr3 |
|---|---|---|---|
| Numerical value | SI=11 | (corresponding to a seismic intensity of lower 5 on the Japanese scale) | 10s |

(B)

| | Initial state | After Tr1 is exceeded | After Tr3 is exceeded |
|---|---|---|---|
| Acceleration sensor sampling interval : g | 0.01s (g0) | 0.02s (g1) | 0.04s (g2) |
| Interval of communication between acceleration sensor and microcontroller : s | 1s (s0) | 5s (s1) | 10s (s2) |
| Number of velocities for each natural period : n | 7 (n0) | 6 (n1) | 5 (n2) |
| Maximum velocity computation interval : R | Until Tr3 (R0) | Until Tr3 (R0) | 10s (R1) |
| Velocity computation interval : m | 1s (m0) | 5s (m1) | 10s (m2) |
| SI value computation interval : I | 1s (I0) | Until Tr3 (I1) | Until end of ground motion (I2) |

FIG.15

EP 2 944 979 B1

FIG.16

## FIG.17

(A)

(B)

(1) Certain acceleration value
(2) Rate of increase in acceleration
(3) Time that elapses before certain acceleration is exceeded
(4) Duration of time when certain acceleration is exceeded
(5) Number of times when certain acceleration is exceeded
(6) Duration of time when certain acceleration is not exceeded
(7) Duration of acceleration from onset to end of earthquake
(8) Certain velocity value
(9) Rate of increase in velocity
(10) Time that elapses before certain velocity is exceeded
(11) Duration of time when certain velocity is exceeded
(12) Number of times when certain velocity is exceeded
(13) Duration of time when certain velocity is not exceeded
(14) Duration of velocity from onset to end of earthquake
(15) Certain maximum velocity value
(16) Rate of increase in maximum velocity
(17) Time that elapses before certain maximum velocity is exceeded
(18) Duration of time when certain maximum velocity is exceeded
(19) Number of times when maximum velocity is exceeded
(20) Duration of time when certain maximum velocity is not exceeded
(21) Time period for which maximum velocity is not updated
(22) Number of times when maximum velocity is not updated
(23) Certain SI value
(24) Rate of increase in SI value
(25) Time that elapses before certain SI value is exceeded
(26) Duration of time when certain SI value is exceeded
(27) Number of times when certain SI value is exceeded
(28) Duration of time when certain SI value is not exceeded
(29) Time period for which SI value is not updated
(30) Number of times when SI value is not updated

FIG.18

(A)

$$SI_t = \frac{1}{9} \int_1^{10} \{Sv_t(T_n)\}dT_n \quad \textbf{Equation 4}$$

(B)

$$SI_t = \frac{1}{B-A} \int_A^B \{Sv_t(T_n)\}dT_n \quad \textbf{Equation 5}$$

FIG.19

(A)

(B)

# FIG.20

EP 2 944 979 B1

**Acceleration sensor**

Ground motion

ax (X-axis component of acceleration)  ay (Y-axis component of acceleration)

**Control unit**

ax (X-axis component of acceleration)  Vector decomposition  ay (Y-axis component of acceleration)

a0 (Acceleration)  a1 (Acceleration)  · · · · · · · · · ·  a7 (Acceleration)

v(T1) (Velocity)  v(T2) (Velocity)  · · ·  v(Tn) (Velocity)  v(T1) (Velocity)  v(T2) (Velocity)  · · ·  v(Tn) (Velocity)  v(T1) (Velocity)  v(T2) (Velocity)  · · ·  v(Tn) (Velocity)

Sv(T1) (Maximum velocity)  Sv(T2) (Maximum velocity)  · · ·  Sv(Tn) (Maximum velocity)  Sv(T1) (Maximum velocity)  Sv(T2) (Maximum velocity)  · · ·  Sv(Tn) (Maximum velocity)  Sv(T1) (Maximum velocity)  Sv(T2) (Maximum velocity)  · · ·  Sv(Tn) (Maximum velocity)

SI0 (SI value)  SI1 (SI value)  · · · · · · · · · ·  SI7 (SI value)

SI(Greatest SI value)

FIG.21

(A)

**Decomposition into eight directions**

Acceleration a0
Acceleration a1
Acceleration a2
Acceleration a3
Acceleration a4
Acceleration a5
Acceleration a6
Acceleration a7

(B)

$a\theta\ (=ax\cos\theta + ay\sin\theta)$

$ax\cos\theta$

ay

$ay\sin\theta$

$\theta$

0    ax

y

x

# FIG.22

EP 2 944 979 B1

## FIG.23

FIG.24

(A)

Acceleration
y(t)[Gal]

Time t[S]

(B)

Velocity
response
v(t)[kine]

Sv(t)

v(t)

Time t[S]

(C) Sv(T)

SI

0.1

2.5

Natural
period T[s]

EP 2 944 979 B1

FIG.25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001042049 A
- US 2005226098 A1
- US 4663628 A
- JP 2011047657 A
- US 2008231343 A